(19) Europäisches Patentamt
European Patent Office
Office européen des brevets

(11) **EP 3 746 500 B1**

(12) **EUROPEAN PATENT SPECIFICATION**

(45) Date of publication and mention of the grant of the patent:
**15.04.2026 Bulletin 2026/16**

(21) Application number: **19748214.4**

(22) Date of filing: **30.01.2019**

(51) International Patent Classification (IPC):
***C08J 5/24*** *(2006.01)*

(52) Cooperative Patent Classification (CPC):
**C08J 5/042; C08J 5/10; C08J 5/243;** C08J 2363/00;
C08J 2477/00; C08J 2481/06

(86) International application number:
**PCT/IB2019/000099**

(87) International publication number:
**WO 2019/150193 (08.08.2019 Gazette 2019/32)**

(54) **PREPREG SHEETS AND PREPREG STACKS USEFUL FOR PREPARING LOW VOID CONTENT FIBER-REINFORCED COMPOSTITE MATERIALS**

ZUR HERSTELLUNG VON HOHLRAUMARMEN FASERVERSTÄRKTEN VERBUNDSTOFFMATERIALIEN NÜTZLICHE PREPREG-FOLIEN UND PREPREG-STAPEL

FEUILLES PRÉ-IMPRÉGNÉES ET EMPILEMENTS PRÉ-IMPRÉGNÉS UTILES POUR PRÉPARER DES MATÉRIAUX COMPOSITES RENFORCÉS PAR DES FIBRES À FAIBLE TENEUR EN VIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2018 US 201862624584 P**
**21.01.2019 US 201962794839 P**

(43) Date of publication of application:
**09.12.2020 Bulletin 2020/50**

(73) Proprietor: **Toray Industries, Inc.**
**Tokyo 103-8666 (JP)**

(72) Inventors:
• **KOYANAGI, Andrew Hideo**
**Tacoma, WA 98446 (US)**
• **HARO, Alfred P.**
**Tacoma, WA 98446 (US)**
• **ARAI, Nobuyuki**
**Tacoma, WA 98446 (US)**

(74) Representative: **Kador & Partner Part mbB**
**Corneliusstraße 15**
**80469 München (DE)**

(56) References cited:
WO-A1-2012/135754     WO-A1-2012/135754
WO-A1-2015/007862     WO-A1-2017/103669
WO-A1-2017/103669     WO-A1-2017/110991
WO-A1-2018/066600     WO-A2-2013/096968
WO-A2-2013/096968     JP-A- 2008 050 587
US-A- 4 957 801        US-A1- 2014 374 018
US-A1- 2014 374 018

EP 3 746 500 B1

**Description**

Field of the Invention

The present invention relates to prepreg sheets capable of providing prepreg stacks that have a high degree of processability as well as cured fiber-reinforced composite materials prepared from such prepreg stacks having very low void content and excellent impact resistance, wherein the prepregs are well suited for use in manufacturing large complex structures and are compatible with automated layup machinery. The prepreg stacks can be molded using only a vacuum pump and oven in an out-of-autoclave process. The present invention also pertains to fiber-reinforced composite materials prepared using such prepreg sheets and prepreg stacks, as well as to manufacturing methods which employ the prepreg sheets and prepreg stacks.

Background of the Invention

Fiber-reinforced composite materials are widely used in industry, including aerospace and spacecraft components which require particularly excellent structural mechanical properties as well as heat resistance. Traditionally, one of the preferred molding methods utilizes an autoclave creating high compaction pressures to consolidate, for example, large and complex structures to achieve the absence of voids in the cured material, thereby producing a rigid, light-weight, and robust composite. On the other hand, these autoclave methods have high operating and capital costs and can restrict the molding size possibly due to equipment capacity. The development of effective alternative molding methods has therefore been of great interest.
Molding methods such as Out-Of-Autoclave (OOA) processes have been developed which rely on vacuum-only methods (also known as VBO-vacuum bag only methods), which apply much lower compaction pressures. OOA processes have demonstrated potential capital cost reductions and permit expanded molding size, yet these processes have difficulty achieving consistent void-free composites when attempting to make large and complex structures due to the lack of high compaction pressures such as those used in an autoclave. Additionally, OOA processing is suitable for fiber-reinforced composite components manufactured using fibers that are preimpregnated with a matrix resin, also known as prepreg sheets or prepregs. To form a composite part from the prepreg sheets in large and complex structures, one or more layers of prepreg sheets are typically assembled within a mold by meticulous hand layup, which could take weeks at a time. Heat is applied to the assembly of prepreg sheets to cause the matrix resin to flow, enabling consolidation of the prepreg layers to produce the final composite.
Current approaches to Out-Of-Autoclave processes typically utilize semi-impregnated prepreg sheets assembled into prepreg stacks comprised of a plurality of prepreg sheets. Such semi-impregnated prepreg sheets are characterized by having a dry (non-impregnated) fiber region in the center (core) section of the prepreg sheet, which allows air, moisture and other volatiles present within the prepreg sheet to be withdrawn from the prepreg sheet during curing. If permitted to be retained in the prepreg sheets, such volatiles lead to the production of voids in the cured fiber-reinforced composite material formed from a stack of such prepreg sheets. The presence of voids in cured fiber-reinforced composite materials is undesirable; as such defects usually detrimentally affect the physical and mechanical properties of these materials. However, the aforementioned approach using semi-impregnated prepregs has been found to be not completely adequate under all circumstances. For example, while semi-impregnated prepregs may work well for fiber-reinforced composite articles which are relatively small with respect to their length and width, they are generally not capable of being used to fabricate void-free laminates for larger structures. This apparently is because the air path within the center sections of individual prepreg sheets, through which the volatiles travel during curing, is discontinuous once a certain laminate length or width is exceeded. That is, as the dimensions (length, width) of a prepreg stack are increased, it becomes increasingly likely that such air path will be blocked or at least restricted to the point where it is difficult to ensure that substantially all of the volatiles are able to be withdrawn from the prepreg stack during curing.
Another problem that has been encountered using semi-impregnated prepreg sheets is observed when automated layup machinery is employed to assemble prepreg stacks from rolls of semi-impregnated prepreg sheets. During the automated layup, dry fiber balls (i.e., clusters of dry fibers) are frequently generated and deposited on the surface of the laminate. Because such dry fiber balls are considered defects which may compromise the quality of the cured fiber-reinforced composite material being produced, the manufacturer will typically need to stop production in order to remove the dry fiber balls from the laminate. This obviously has a negative impact on productivity and costs. WO 2017/103669 A1 discloses a partially impregnated prepreg comprising a matrix of reinforcing fiber, a thermosetting resin, and a particle or a fiber. The prepreg having good storage stability, a low void ratio and providing excellent mechanical performance suitable for use in a OOA process.

Summary of the Invention

It has now been discovered that the incidence of voids in a large fiber-reinforced composite may be advantageously reduced by utilizing, in the manufacture of a fiber-reinforced composite material, a prepreg sheet as defined in claim 1.

Further, such low void content fiber-reinforced composite materials may be conveniently produced using out-of-autoclave processes, in accordance with the methods of the invention. Another advantage of the present invention is that the prepreg sheets, when used with automated layup machinery, exhibit a reduced tendency to form dry fiber balls on the surface of the laminate that is produced.

One or more of the above-described characteristics may be imparted to a prepreg sheet by subjecting the prepreg sheet to a conditioning step, prior to assembling the prepreg sheet into a prepreg stack, which involves subjecting a precursor prepreg sheet (in which at least one side of the precursor prepreg sheet is at least partially covered with a thermosettable resin composition containing thermoplastic particles) to vacuum conditions. Conditioning a prepreg sheet in such a manner has been found to modify the surface(s) of the prepreg sheet, whereby the thermoplastic particles become preferentially exposed or concentrated to a greater extent at the prepreg sheet surfaces. Without wishing to be bound by theory, it is believed that this modification may take place as a result of residual volatiles in the thermoplastic particles which cause the thermoplastic particles to be preferentially drawn to the outer surface of the prepreg sheet and/or as a result of the thermosettable resin (which is flowable to some extent at the conditioning temperature) being drawn down further into the underlying fiber matrix (with the thermoplastic particles, which remain solid at the conditioning temperature, being blocked at least in part from being similarly drawn down into the fiber matrix by the filtering effect of the fiber matrix). This results in an increase in the roughness of the surface, which has been found to assist in the development and maintenance of interlayer gas flow passages (also referred to herein as "inter-laminar air paths") between stacked layers of prepreg sheets during curing of such prepreg stacks. The thermoplastic particles exposed at a prepreg sheet surface interact with an immediately adjacent second prepreg sheet surface (which may also have thermoplastic particles similarly exposed or concentrated on such surface) so as to prevent the prepreg sheet surfaces from coming into direct contact with each other to such an extent that the desired permeability characteristics are not achieved. Thus, altering the surface morphology of the prepreg sheet allows point-to-point surface contact between adjacent prepreg sheets in a stack, thereby creating the inter-laminar air paths which contribute to the achievement of a degree of permeability effective to permit the prepreg stack to be consolidated and cured in a manner which results in a low incidence (e.g., <1%) of voids in the resulting fiber-reinforced composite material. The improved prepreg permeability resulting from the inter-laminar air paths renders the prepreg sheets suitable for use even in automated layup machinery. During curing, the inter-laminar air flow paths permit the removal of volatiles from the prepreg stack that would otherwise result in the formation of voids within the cured fiber-reinforced composite material, yet by the completion of curing have themselves closed up to provide an essentially fully solid (low void content) article.

Various embodiments of the present invention may provide one or more of the following benefits and advantages. Prepreg sheets and prepreg stacks having an improved length-wise permeability can be provided, which are well suited for large structural applications (e.g., the production of articles comprised of cured fiber-reinforced composite materials which are relatively large in size, e.g., at least 0.2, at least 0.3, at least 0.4, at least 0.5, at least 0.6, at least 0.7, at least 0.8, at least 0.9 or at least 1.0 meters long in both length and width). As a result of the rough surfaces of the prepreg sheets used to prepare the prepreg stacks, an extended air path for effective removal of volatiles during the initial stages of curing is still available, thereby permitting the production of cured fiber-reinforced composite materials having an exceptionally low void content (e.g., less than 1%, less than 0.5%, less than 0.1% or even 0%). Prepreg sheets and prepreg stacks in accordance with the present invention may suitably be used with automated layup machinery as well as in large structural application fabrication.

Preferred embodiments of the prepreg sheet of the invention are defined in claims 2 to 8.

The invention further concerns a method of making a prepreg sheet according to claim 9 or 10, a method of making a prepreg stack according to claim 11, a method of making a fiber-reinforced composite material according to claim 12, and a method of fabricating a fiber-reinforced composite structure according to claim 13 or 14.

Brief Description of the Drawings

Fig. 1 shows, in schematic form, a cross-section of a stack of exemplary prepreg sheets in accordance with the present invention.
Fig. 2 illustrates the consolidation of the prepreg stack of Fig. 1 into a fiber-reinforced composite material.
Fig. 3 shows photographs of the surface of a prepreg sheet before vacuum conditioning (Fig. 3A) and after vacuum conditioning (Fig. 3B and Fig. 3C) in accordance with the present invention.

Fig. 4 illustrates a permeability tester suitable for measuring the gas permeability of laminate bodies (prepreg stacks).

Detailed Description of the Invention

Although the invention is illustrated and described herein with reference to specific embodiments, the invention is not intended to be limited to the details shown.

The term "room temperature" as used herein means 23°C, unless the context indicates otherwise.

Test Methods

Certain of the parameters characteristic of the prepreg sheets, prepreg stacks and fiber-reinforced composite materials in accordance with certain embodiments of the present invention may be measured as follows:

a) Average surface roughness (Ra)

The following procedure covers the performed steps for measuring the surface texture of a prepreg. The surface texture measurement is performed in accordance with the test method "JIS B 0601 (1994), Japanese Industry Standard (Surface Roughness)". A surface roughness is measured using a surface contact instrument (Surftest SV-2100H4) which is traversed over a range of 60mm on the surface of the prepreg. A standard contact stylus is used in the experiment which appropriately determines the size and texture of the surface features of the prepreg.

b) Thermoplastic particle exposure percentage

The following procedure is used to measure the percentage exposure of the thermoplastic particles on the prepreg surface (referred to herein as the "thermoplastic particle exposure percentage"). This analysis is conducted through image analysis by capturing and tiling surface images on the prepreg using a scanning electron microscope (SEM instrument-Phenom Pro). The captured area of interest is 8mm by 8mm and the percentage exposure of the thermoplastic particles is calculated by dividing the area of the exposed particles by the total surface area and multiplying by 100.

c) "In-plane gas permeability in a direction parallel to the plane of a prepreg sheet" and "laminate lengthwise gas permeability"

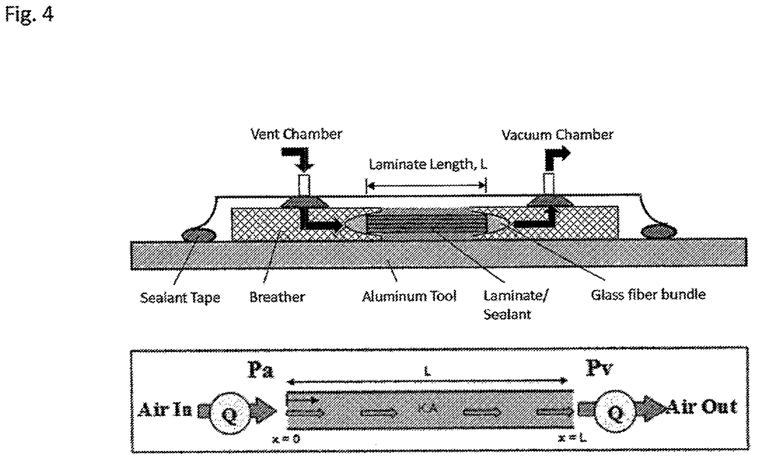

The following procedure is employed to measure the permeability characteristics of laminate bodies (prepreg stacks) prepared using a plurality of prepreg sheets (wherein the prepreg sheets have been laid up in multiple plies to provide a prepreg stack). The permeability test measurement is performed in accordance with the procedures described in pages 36-48 of the master's thesis of Kevin Hsiao entitled "Gas Transport and Water Vaporization in Out-of-Autoclave Prepreg Laminates" (University of British Columbia 2012). Gas permeability in the in-plane and through-thickness directions is measured and the effects of processing conditions such as out time, storage, and vacuum conditioning times are documented. First, 4-8 plies of unidirectional prepreg are cut with dimensions of approximately 50 mm (w) x 300 mm (l). Based on the desired nominal thickness (approximately 0.07 inches (1.8 mm)), plies are then laid up and consolidated at room temperature (ca. 23°C) under vacuum at a level of about 5 kPa. Each sample is laid up such that two breathing edges remain exposed in the in-plane testing direction as shown in FIG. 4. The exposed edges are covered by glass fiber bundles and placed in contact with layers of breather and vacuum ports to form complete pathways for gas (air) removal and monitoring. The permeability tester is then checked for leaks. Thereafter, the test is initiated and once steady-state flow is achieved, flow rate data is recorded at desired time intervals.

The test measures Q through the laminate stack and permeability K are calculated by Darcy's Steady State flow:

$$Q = \frac{AK}{2\mu L}\left(\frac{p_0^2 - p_L^2}{p_0}\right)$$

where:

K [m²] is Permeability
Q [m³/s] is steady-state volumetric flow rate
$\mu$ [Pa*s] is the dynamic viscosity of air at room temperature
L [m] is laminate length
A [m²] is cross-sectional area

$P_0$ [Pa] is pressure in
$P_L$ [Pa] is pressure out

To measure the laminate lengthwise gas permeability, the laminate is prepared to the desired length for permeability measurement. The laminate lengthwise gas permeability measurement in the context of the present invention is conducted on a 1m laminate with a width of 100mm. This allows measuring the permeability of the laminate at a certain length to determine whether the laminate can acquire the permeability especially for large structural fabrication.

d) Water pickup rate

A prepreg impregnation level determines the degree of resin impregnated into the fiber and can be measured through a water pickup test. This test method works by capillary action to wick water from a reservoir into the prepreg through the unimpregnated dry fibers. The procedure for the water pickup test follows the following steps. Six plies of prepreg are cut to 100 mm x 100 mm. After the removal of the backing paper, the mass of each individual ply is measured. The six plies are then assembled in the WPU apparatus by stacking each ply with a release film spacer between them and clamped down in the apparatus such that the 0° fiber orientation of the stack is perpendicular to the surface of the water. As the clamped stack is placed vertically in the apparatus, 5 mm of the prepreg stack is immersed in room temperature water in a lab environment at 23 °C with 50 % relative humidity. After 10 minutes of immersion, the samples are removed from the water and excess water is removed from the exterior, and the specimen mass measured again to obtain the percentage of the water uptake from the initial state using the equation below. The percentage of the water uptake WPU (%) is calculated by averaging the measured weights for the six samples.

$$WPU = \frac{m_{wet} - m_{dry}}{m_{dry}}$$

e) Void content

A cured composite article consisting of 35 plies of unidirectional prepreg in a [0°/90°] laminate sequence with a laminate body 1000 mm long and 1000 mm wide is cured under out-of-autoclave cure conditions. Three 25 mm long x 25 mm wide sample pieces are cut from this laminate body, and the cross-section is polished for micrograph analysis. Multiple images across the 25mm laminate length are captured with a magnification of x50 or higher such that the entire laminate specimen will fit in the field of view for analysis. The void content is calculated by summation of the void area and then dividing that by the entire cross sectional image.

f) Minimum viscosity

In other embodiments of the present invention, the thermosettable resin composition may have a certain viscosity at a particular temperature (e.g., 30 °C, 40 °C, 130 °C). In the present invention, "viscosity" refers to the complex viscoelastic modulus $\eta^*$. The viscosity of the thermosettable resin composition is measured using a dynamic viscoelasticity measuring device (ARES, manufactured by TA instruments) using parallel plates with a diameter of 40 mm while increasing the temperature at a rate of 2°C/min, with a strain of 10%, frequency of 0.5Hz, and plate interval of 1mm, from 40°C to 150°C. As the thermosettable resin composition is subjected to temperature increases, the viscosity initially decreases. At a certain temperature, however, the epoxy resin in the thermosettable resin composition starts to cure, which is when the viscosity starts to increase again. Minimum viscosity can be calculated from a correlation curve of the temperature and the viscosity under the condition of rate of temperature increase at 2°C/min, a vibration frequency of 0.5 Hz, and a parallel plate (diameter 40 mm). Viscosity at 30°C (referred to as initial viscosity) and minimum viscosity (referred to as highest resin flow point →most liquid state) can be obtained by the curve generated from the ARES device plot using the same parameters. "Minimum viscosity temperature" refers to the temperature at which the thermosettable resin composition exhibits a minimum viscosity.

g) Particle size/particle diameter

The following procedure is used to measure the particle size of the thermoplastic particles used in the thermosettable resin composition and present on the prepreg surface (referred to herein as the "particle diameter"). Laser diffraction measures particle size distribution by measuring the angular variation in intensity of light scattered as a laser beam passes through a dispersed sample. The angular scattering intensity data is computed to analyze the size of the particles which are responsible for creating a scattering pattern. This method allows the particle diameter to be reported as volume equivalent particle size. In particular, the procedure described in JIS Z 8825 (2013 Edition) can be used to measure particle size.

Herein, "prepreg" refers to a molding intermediate substrate where a matrix (e.g., a layer) of reinforcing fiber is impregnated with a matrix resin. In the present invention, a thermosettable (thermosetting) resin composition containing thermosettable (thermosetting) resin and particles or fibers of thermoplastic resin ("thermoplastic particles") is used as the matrix resin. Other components may also be present in the thermosettable resin composition including, for example, one or more hardeners. The thermosettable resin is in an uncured condition in the prepreg, and a fiber-reinforced composite material can be obtained by laying up the prepreg (stacking up multiple layers of prepreg to form a laminate body, also referred to herein as a "prepreg stack") and curing. When a fiber-reinforced composite material is made by laying up a plurality of prepregs and curing the resulting laminate body, the surface part of the prepreg becomes an interlayer molded layer containing a thermoset resin (formed from the thermosettable resin) and the thermoplastic particles, formed on the layer of the reinforcing fibers which is preferably up to a depth of about 20% from the surface of the reinforcing fibers, and the interior portion of the prepreg becomes a reinforcing fiber layer of the fiber-reinforced composite material.

In certain embodiments of the invention, the prepreg is in the form of a sheet (referred to herein as a "prepreg sheet") having a thickness of 0.005 inches to 0.011 inches (0.13 mm to 0.28 mm). A laminate body (prepreg stack) containing plies of prepreg in accordance with the present invention may contain two or more prepreg plies, for example 2 to 30 plies or 4 to 20 plies.

Prepreg sheets in accordance with the present invention may be prepared using various methods. One suitable method involves the treatment of a precursor prepreg sheet under conditions effective to obtain a prepreg sheet having one or more of the characteristics associated with the prepreg sheets of the present invention. As used herein, the term "precursor prepreg sheet" refers to a prepreg sheet that is a precursor to a prepreg sheet in accordance with the present invention (i.e., a prepreg sheet that lacks attributes associated with the inventive prepreg sheets, but which may be converted to an inventive prepreg sheet by conditioning in accordance with the procedures described herein).

In particular, such a method may comprise impregnating a fiber layer with a thermosettable resin composition to form a precursor prepreg sheet wherein a first side of the precursor prepreg sheet is at least partially covered with the thermosettable resin composition and subjecting the precursor prepreg sheet to vacuum conditions at a temperature and for a time effective to produce the prepreg sheet. In another embodiment, both sides of the precursor prepreg sheet are at least partially covered with the thermosettable resin composition.

Impregnation of the fiber layer with a thermosettable resin composition may be carried out using any such technique known or used in the art. Impregnation methods include the wet method and hot melt method (dry method).

The wet method is a method in which reinforcing fibers are first immersed in a solution of a thermosettable resin composition, created by dissolving the thermosettable resin composition in a solvent, such as methyl ethyl ketone or methanol, and retrieved, followed by the removal of the solvent through evaporation via an oven to impregnate the reinforcing fibers with the thermosettable resin composition. The hot-melt method may be implemented by impregnating reinforcing fibers directly with a thermosettable resin composition, made fluid by heating in advance, or by first coating a piece or pieces of release paper with a thermosettable resin composition for use as a resin film and then placing a film over one or either side of reinforcing fibers as configured into a flat shape, followed by the application of heat and pressure to impregnate the reinforcing fibers with the thermosettable resin composition. The hot-melt method may give a prepreg having virtually no residual solvent in it.

According to one embodiment, the impregnation may be carried out in a manner effective to provide a precursor prepreg sheet which is fully impregnated. That is, the thermosettable resin composition is introduced in a manner such that it penetrates throughout the entire thickness of the reinforcing fibers. However, in other embodiments, impregnation of the reinforcing fibers is performed under conditions such that at least one air path exists within the precursor prepreg sheet, i.e., an area extending through the reinforcing fiber layer which is not impregnated by the thermosettable resin composition (such an area may be referred to herein as a "fiber air path"). In still further embodiments, such a fiber air path is maintained (although perhaps diminished in thickness) following conversion of the precursor prepreg sheet to a prepreg sheet in accordance with the present invention. The fiber air path can further assist in the removal of volatiles from within a prepreg stack formed from a plurality of prepreg sheets prepared in accordance with the present invention. Methods of carrying out partial impregnation of reinforcing fibers in a manner effective to provide a fiber air path within a prepreg sheet are well-known in the art and any of such methods may be adapted for use in connection with the present invention. Such partial impregnation methods are described, for example, in WO 2017/103669, US 6,391,436, US 2013/0217283, US 2014/0087178, and US 2014/0309336.

The degree of impregnation of the prepreg sheet may be varied and controlled as may be desired or suitable for a particular end-use application. Water pickup (WPU) is typically used as a relative measure of the extent of impregnation of a prepreg sheet. According to certain aspects, prepreg sheets in accordance with the present invention may have a WPU of from about 1% to about 10% or from about 2% to about 7%, for example. If the prepreg sheet is intended for use in an automated layup method such as Automated Fiber Placement (AFP) or Automated Tape Layup (ATL), the prepreg sheet may advantageously have a WPU of from about 1% to about 5%. Where the prepreg sheet is intended to be used in a hand layup method, the prepreg sheet may advantageously have a WPU of from about 5% to about 10%. The prepreg sheet used in AFP is typically about 3.18 mm to about 50.8 mm (about 1/8 inch to about 2 inches) in width, wherein the prepreg sheet used in ATL is typically about 152.4 mm to about 304.8 mm (about 6 inches to about 12 inches) in width.

With the prepreg sheet of the present invention, the particles of thermoplastic resin ("thermoplastic particles") are locally provided on the surface part of the prepreg sheet. In other words, a layer with an abundance of the aforementioned thermoplastic particles may be present on at least one surface of the prepreg sheet, where the thermoplastic particles can clearly be identified to exist locally when the prepreg sheet is observed in cross section. This layer is hereinafter also referred to as an interlayer molding layer, as it is present between adjacent layers of prepreg in the laminate body and in the fiber-reinforced composite material obtained by curing and molding the laminate body. Thereby, if the prepreg is overlaid and the matrix resin is cured to form a fiber-reinforced composite material, an interlayer is formed where the aforementioned thermoplastic particles exist locally between the reinforcing fiber layers. This feature serves to increase the toughness between the reinforcing fiber layers, and the fiber reinforced composite material obtained will have a high degree of impact resistance.

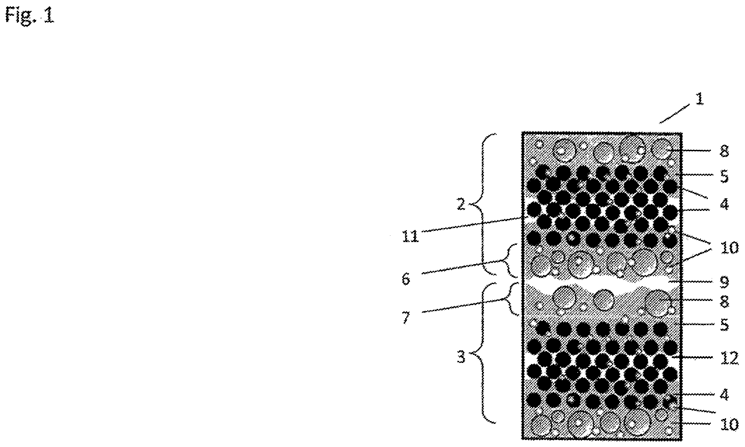

FIG. 1 shows an example of a cross-section view of a typical laminate body as may be fabricated using prepreg sheet in accordance with the present invention. In particular, FIG. 1 shows, in cross section, an example of a laminate body (1) before cure, consisting of two layers (2 and 3) (plies) of partially impregnated prepreg sheet. Each ply comprises reinforcing fibers (4) and thermosettable resin composition (5), wherein thermosettable resin composition (5) partially impregnates the layers of reinforcing fibers (4). The concentration of thermoplastic particles (8) in the portion of thermosettable resin composition (5) which has partially impregnated the layers of reinforcing fibers (4) is reduced due to the filtering effect of the layers of reinforcing fibers (4). Surface layers (6) and (7) comprised of thermosettable resin composition (5) and thermoplastic particles (8) are present at the bottom of ply (2) and the top of ply (3). At least a portion of the thermoplastic particles (8) present in surface layers (6) and (7) at least partially extend or project outward from the matrix of thermosettable resin composition (5), thereby imparting a roughened texture to surface layers (6) and (7). Such a configuration may be attained, for example, by exposing precursor prepreg sheets to vacuum conditions in a vacuum conditioning step. Surface layers (6) and (7) are in contact with each other in laminate body (1), with the surface-exposed thermoplastic particles assisting in the formation of an inter-laminar air flow layer (9) between plies (2) and (3). Such inter-laminar air flow layer (9) provides a permeable pathway within the laminate body, through which volatiles (10) can escape during consolidation and curing of the laminate body. The unimpregnated reinforcing fiber intralayers (11 and 12), which are created as a result of partial impregnation of layers reinforcing fibers (5), provide additional permeable pathways (fiber air paths) within the laminate body, which can further assist in the removal of volatiles (6).

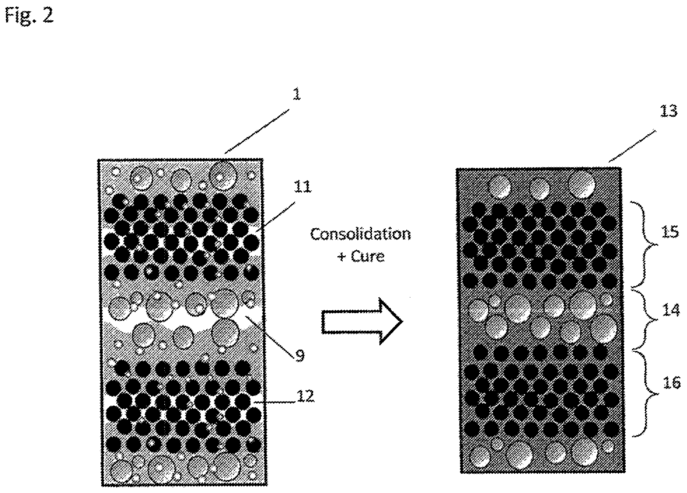

The consolidation and curing process for two plies of prepreg in accordance with one embodiment of the present invention may be described by reference to FIG. 2. FIG. 2 is a schematic of the consolidation and curing process for two plies of prepreg (together comprising a permeable laminate body, as illustrated in FIG. 1), showing (on the left side of FIG. 2) the laminate body before cure (when it is permeable) and (on the right side of FIG. 2) after cure (when it has been converted to a fiber-reinforced composite material having a favorably low void content). The laminate body (1) on the left side of FIG. 2 shows a similar configuration to FIG. 1 before cure. After consolidation and cure (as illustrated on the right side of FIG. 2), intralayers (15) and (16) comprised of reinforcing fibers and cured thermosettable resin composition are completely formed within the consolidated and cured laminate body (13), whereby fiber air paths (11) and (12) are eliminated as a result of consolidation, and an interlayer molded layer (14) resulting from consolidation and curing of surface layers (6) and (7) is further distinguishable between two fiber layers in the consolidated and cured laminate body (13). Thus, inter-laminar air flow layer (9) has been eliminated as a result of the consolidation of surface layers (6) and (7). Unimpregnated layers (11, 12) and inter-laminar air flow layer (9) function as gas permeable pathways through the laminate body, thereby facilitating the escape of gases and volatiles within the laminate body that might otherwise become entrapped in the laminate body during curing of the thermosettable resin composition (5), thereby creating undesirable voids in the resulting fiber-reinforced composite material (13) made from the laminate body.

The prepreg, in one embodiment of the present invention, has an unimpregnated layer (11, 12), providing a fiber air path. During curing of the prepregs in the laminate body (prepreg stack) (1), the thermosettable resin composition (5) impregnates the unimpregnated layer (11, 12). At the same time, the density of the prepreg is increased as a result of the air spaces within the unimpregnated layer (11, 12) and within the inter-laminar air flow layer (9) being replaced by thermosettable resin composition (5). The portions of thermosettable resin composition which had been separated from each other on either side of the unimpregnated layers (11, 12) and at the interface between plies (2) and (3) may be regarded as becoming integrated with each other during curing so as to form a continuous resin matrix in the fiber-reinforced composite material (13) thereby obtained. In the present invention, this series of processes is defined as the consolidation process. In order to achieve low voids in the fiber reinforced composite material obtained, the aforementioned consolidation process is completed during curing of the prepreg. Furthermore, as one step of the consolidation process, air that is trapped during layup and volatile components from the prepreg (with such air and volatile components collectively referred to herein as "volatiles") are released or drawn out of the prepreg during the consolidation process. Air that is trapped during layup and volatile components from the prepreg are released out of the prepreg while at the same time the unimpregnated layer **(11, 12)** inside the prepreg is impregnated with matrix resin and the surface layers **(6, 7)** between adjacent prepreg sheets can be brought together to eliminate the interlaminar gas flow layer **(9),** and the prepreg consolidation process can be completed. Furthermore, the fiber-reinforced composite material obtained can simultaneously have a low void content and high impact resistance.

The reinforcing fiber cross-sectional density of a prepreg may be 50 to 350 g/m$^2$. If the cross-sectional density is at least 50 g/m$^2$, there may be a need to laminate a small number of prepregs to secure the predetermined thickness when molding a fiber-reinforced composite material and this may simplify lamination work. If, on the other hand, the cross-sectional density is no more than 350 g/m$^2$, the drapability of the prepreg may be acceptable. If the reinforcing fiber volume fraction is at least 50%, this may provide the advantage of a fiber-reinforced composite material in terms of its excellent specific strength and specific modulus, as well as preventing the fiber-reinforced composite material from generating too much heat during the curing time. If the reinforcing fiber volume fraction is no more than 80%, impregnation with the resin may be satisfactory, decreasing a risk of a large number of voids forming in the FRP material.

With the prepreg sheets of the present invention, the amount of reinforcing fibers per unit area is preferably between 100 and 310 g/m$^2$. If the amount of reinforcing fibers is low, the number of lamination layers required to obtain the desired thickness in the laminate body will need to increase, and the operation may become complex, but if the amount of reinforcing fibers is too high, the draping properties of the prepreg sheet may be compromised.

The prepreg sheet of the present invention preferably has a fiber weight content between 30% and 80%, more preferably between 40% and 70%, and most preferably between 50% and 65%. If the fiber weight content is too low, there is a possibility that the amount of matrix resin will be too high, and the advantages of a fiber-reinforced composite material with excellent specific strength and specific modulus will not be achieved. If the fiber weight content is too high, improper impregnation could occur due to insufficient resin, and there is a possibility that a large number of voids will form in the fiber-reinforced composite material obtained using the prepreg.

Preparation of Prepreg Sheets in Accordance with the Invention

In certain aspects of the invention, a precursor prepreg sheet is modified by a conditioning procedure wherein the precursor prepreg sheet is subjected to vacuum conditions. Such conditioning may, for example, increase the average surface roughness of the prepreg sheet as compared to the average surface roughness of the precursor prepreg sheet prior to conditioning. According to certain embodiments, such increased surface roughness may be attributable to an increase in the concentration of thermoplastic particles at the prepreg surface. Thus, the outer surface of a layer of a thermosettable resin composition comprised of thermosettable resin and thermoplastic particles present on the surface of a reinforcing fiber matrix may initially (in the precursor prepreg sheet) be relatively smooth as a consequence of how the reinforcing fiber matrix was impregnated with the thermosettable resin composition. When such smooth-surfaced precursor prepreg sheets are laid up into a prepreg stack, there will be a very low level of inter-layer permeability because of the ability of the precursor prepreg sheet surfaces to come into extensive direct contact with each other, thereby significantly reducing the opportunity to form and maintain (during at least the early stages of curing) permeable pathways extending throughout the length and/or width of the prepreg stack. However, roughening the surface of the prepreg sheets in accordance with aspects of the present invention provides an effective way to provide such permeable pathways between the prepreg sheets in the prepreg stack. The existence of such permeable pathways (inter-laminar air paths) is believed to be responsible, at least in part, for the ability to form cured fiber-reinforced composite materials having a remarkably low (<1%) void content, even when the fiber-reinforced composite material is relatively large in size and/or has been produced using an out-of-autoclave process.

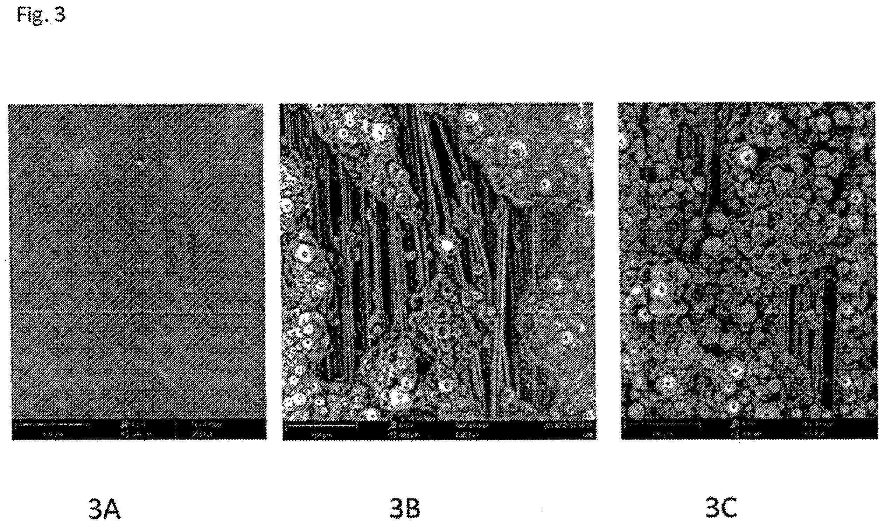

FIG. 3 shows photographs of the surface of a representative prepreg sheet before and after vacuum conditioning in accordance with certain aspects of the present invention. Accordingly, FIG. 3A is a photograph of a precursor prepreg sheet surface, showing that the surface is relatively smooth with few thermoplastic particles exposed at such surface. Additionally, little of the reinforcing fiber layer is visible. After the vacuum conditioning (50°C for 1 hour in a vacuum oven), the precursor prepreg sheet is converted to a prepreg sheet in accordance with the invention as illustrated in FIG. 3B. The thermoplastic particles have become much more exposed at the outer surface of the prepreg sheet, thereby roughening the surface as compared to the surface of the precursor prepreg sheet. Furthermore, the underlying fiber layer is also exposed to a greater extent as a result of the vacuum conditioning.

Prepreg sheets in accordance with the present invention may be prepared by applying a vacuum (i.e., a subatmospheric pressure) to a precursor prepreg sheet obtained by impregnating (partially or fully) a reinforcing fiber layer with a thermosettable resin composition. According to various aspects of the invention, the vacuum applied to the precursor prepreg sheet may be not more than 0.5MPa, not more than 0.4MPa, not more than 0.3MPa, not more than 0.2MPa, not more than 0.1MPa or not more than 0.05MPa. In other embodiments, the vacuum applied may be not less than 0.005MPa, not less than 0.01MPa or not less than 0.02MPa. In one aspect of the invention, the precursor prepreg sheet is subjected to a vacuum of from 0.01MPa to 0.1MPa. The vacuum applied may be constant throughout the conditioning step or may be varied during the conditioning step. For example, the vacuum initially applied may be relatively low and then increased (either continuously or in a stepwise manner).

The temperature of the precursor prepreg sheet while being conditioned may, for example, be ambient (room) temperature or a temperature somewhat higher than normal room temperature. For example, the conditioning temperature may be at least 15°C, at least 20°C, or at least 25°C and/or not more than 100°C, not more than 90°C, not more than 80°C, not more than 70°C or not more than 60°C. According to one aspect, the temperature is from 20°C to 80°C. During conditioning, the temperature of the precursor prepreg sheet may be held constant or may be varied in a gradient or stepwise manner (for instance, the conditioning temperature may initially be relatively low and then increased over time).

According to certain embodiments of the invention, the precursor prepreg sheet is conditioned at a temperature which is from 20°C to 80°C less than the minimum viscosity temperature of the thermosettable resin composition.

Generally speaking, the precursor prepreg sheet is subjected to vacuum and temperature conditions for a time effective to impart the desired characteristic or characteristics to the precursor prepreg sheet (that is, a time effective to obtain a prepreg sheet having at least one of characteristics a)-d)). Such times will, of course, depend upon a number of variables, including the conditioning pressure, conditioning temperature, the components used to prepare the precursor prepreg sheet and so forth, but may be readily determined by routine testing. For example, samples of a precursor prepreg sheet may be subjected to preselected pressure and temperature conditions and individual samples then evaluated at certain time intervals to ascertain whether the target characteristic(s) (e.g., average surface roughness) has or have been attained. Typically, conditioning times of from 0.1 hours to 24 hours will be suitable. According to certain embodiments, conditioning of a precursor prepreg sheet is conducted in accordance with the following parameters: a temperature of from 20°C to 80°C, a time of from 0.1 hours to 24 hours, and a vacuum of from 0.01MPa to 0.1MPa.

The conditioning may be conducted in any suitable apparatus such as a vacuum chamber or vacuum oven. Individual precursor prepreg sheets may be conditioned. Alternatively, a stack of precursor prepreg sheets may be formed and then subjected to conditions effective to impart the desired characteristics to such sheets.

Generally speaking, increasing the degree of vacuum and/or increasing the conditioning temperature will lead to more rapid attainment of the characteristics associated with the prepregs of the present invention.

Permeability can be described as the state of a material (the laminate body or prepreg stack) that causes it to allow gases (air) to pass through it. A relatively high degree of permeability could allow large and complex structures, for example, to exhibit high consistency in part quality such as low void content and could further improve out-time and storage stability. If the permeability of the laminate body is relatively low, longer process times may occur due to a longer time needed to remove entrapped air or volatiles during de-bulking, potentially causing inefficient manufacturing methods.

In at least certain aspects of the present invention, particles of thermoplastic resin are locally provided on the surface part of the prepreg. In other words, a layer with an abundance of the aforementioned thermoplastic particles may be present on at least one surface of the prepreg, where the thermoplastic particles can clearly be identified to exist locally when the prepreg is observed in cross section. This layer is hereinafter also referred to as an interlayer molding layer, as it is present between adjacent layers of prepreg in the laminate body (prepreg stack) and in the fiber-reinforced composite material obtained by curing and molding the laminate body (prepreg stack). Thereby, if the prepreg is overlaid and the matrix resin is cured to form a fiber-reinforced composite material, an interlayer is formed where the aforementioned thermoplastic particles exist locally between the reinforcing fiber layers. This feature serves to increase the toughness between the reinforcing fiber layers, and the fiber reinforced composite material obtained will have a high degree of impact resistance. Moreover, as previously explained, the prepreg may be conditioned in a manner effective to cause thermoplastic particles present in such interlayer molding layer to protrude or otherwise extend from such layer, thereby roughening the surface of the prepreg and providing inter-laminar air paths between adjacent sheets of prepreg in a prepreg stack which facilitates the removal of volatiles during curing, thereby helping to lower the void content of the cured fiber-reinforced composite which is obtained.

Prepreg sheets having one or more of the desirable characteristics described herein may also be prepared by methods other than the vacuum conditioning techniques described previously. Such alternative methods may include, for example, controlling the viscosity of the thermosettable resin composition used to impregnate the fiber layer and allowing the resin to sink into the fiber bed, thereby leading to greater exposure of the thermoplastic particles at the surface of the prepreg. A suitable temperature range which will allow the resin to sink into the fiber bed (fiber layer) and allow for thermoplastic particle exposure is a temperature range preferably from 20°C to 80°C, more preferably from 20°C to 50°C, still more preferably from 20°C to 40°C and most preferably from 20°C to 30°C less than the minimum viscosity temperature of the thermosettable resin composition. This will allow the resin to sink into the fiber bed and expose the thermoplastic particles without initiating reaction of the thermosettable resin composition. The degree of exposure of the thermoplastic particles is also a critical parameter for suitable out-of-autoclave processing. If the thermoplastic particles are over-exposed the surface tack of the prepreg sheet will decrease, and during layup of the prepreg sheet the handling will be more difficult.

Reinforcing Fibers

There are no specific limitations or restrictions on the type or types of reinforcing fiber used in the present invention, and a wide range of fibers, including glass fiber, carbon fiber, graphite fiber, aramid fiber, boron fiber, alumina fiber and silicon carbide fiber, may be used. Carbon fiber may provide FRP materials that are particularly lightweight and stiff. Carbon fibers with a tensile modulus of 180 to 800 GPa may be used, for example. If a carbon fiber with a high modulus of 180 to 800 GPa is combined with a thermosettable resin composition to provide a prepreg, a desirable balance of stiffness, strength and impact resistance may be achieved in the cured FRP material prepared from such a prepreg.

There are no specific limitations or restrictions on the form of reinforcing fiber, and fibers with diverse forms may be used, including, for instance, long fibers (drawn in one direction), tow, fabrics, mats, knits, braids, and short fibers (chopped into lengths of less than 10 mm). Here, long fibers mean single fibers or fiber bundles that are effectively continuous for at least 10 mm. Short fibers, on the other hand, are fiber bundles that have been chopped into lengths of less than 10 mm. Fiber configurations in which reinforcing fiber bundles have been aligned in the same direction may be suitable for applications where a high specific strength and specific modulus are required.

Thermosettable Resin Composition

The prepreg sheets of the present invention are impregnated with a thermosettable resin composition. Suitable thermosettable resin compositions comprise at least one thermosettable resin, thermoplastic particles, and, optionally, one or more additional components such as hardeners, and thermoplastic resins solubilized in the thermosettable resin.

The initial viscosity at 30°C of the thermosettable resin composition employed in the present invention is preferably between 20,000 and 140,000 Pa•s and most preferably is between 20,000 and 130,000 Pa•s, in order to maximize the permeability needed at room temperature of the laminate body to maintain long out time processing (for example, 20 days out time) and storage stability. If the viscosity at 30°C is too low, there is a possibility resin flow could prematurely close off the air paths, causing high void content in the fiber-reinforced composite material obtained; this would reduce the out time capability of the prepreg. If the viscosity at 30°C is too high, improved permeability could be achieved, although resin flow may be restricted during cure and interfere with the consolidation process, thereby leading to high void content.

The viscosity of the thermosettable resin composition around 130°C is preferably between 0.1 and 15 Pa•s, more preferably between 0.3 and 10 Pa•s, and most preferably between 0.5 and 10 Pa•s. If the viscosity around 130°C is too low, the flow of the matrix resin could be too high causing the resin to bleed out of the laminate body during the cure process. Furthermore, there is a possibility that the desired resin fraction might not be achieved for the fiber reinforced composite material obtained, the flow of the matrix resin in the prepreg will be insufficient, and an undesirably high content of voids would be present in the fiber-reinforced composite material obtained. If the viscosity at around 130°C is too high, there is a possibility that the flow of the matrix resin in the prepreg will be low, causing the consolidation process of the laminate body to end early; this is likely to lead to a high void content in the fiber reinforced composite material obtained (compromising the mechanical properties of the composite material).

The glass transition temperature of the cured matrix resin influences the heat resistance of the fiber-reinforced composite material. It is preferred that the cured product of the thermosettable resin composition has a high glass transition temperature. Specifically, it is preferred that the glass transition temperature of the cured thermosettable resin composition obtained be at least 200°C.

In the preparation of a thermosettable resin composition employed in the present invention, a kneader, planetary mixer, triple roll mill, and twin screw extruder may advantageously be used. Where two or more epoxy resins or other thermosettable resins are used, after the thermosettable resins are placed in the equipment, the mixture is heated to a temperature in the range of from 60 to 160°C while being stirred so as to uniformly dissolve the epoxy resins. During this process, other components, excluding the curing agent(s) (e.g., thermoplastic resin, inorganic particles), may be added to the epoxy resins and kneaded with them. Thereafter, the mixture is cooled down to a temperature of no more than 100°C in some embodiments, no more than 80°C in other embodiments, while being stirred, followed by the addition of the curing agent(s) and kneading to disperse those components. This method may be used to provide a thermosettable resin composition with excellent storage stability.

Thermosettable Resins

The thermosettable resins useful in the present invention may be defined herein as any resin which is self-curing upon application of heat or which can be cured with a curing agent or a cross-linker compound by means of an externally supplied source of energy (e.g., heat, light, electromagnetic waves such as microwaves, UV, electron beam, or other suitable methods) to form a three dimensional crosslinked network having the required resin modulus. Mixtures or blends of two or more different thermosettable resins may be used. The thermosettable resin(s) may be selected from, but are not limited to, epoxy resins, epoxy novolac resins, ester resins, vinyl ester resins, cyanate ester resins, maleimide resins, bismaleimide resins, bismaleimide-triazine resins, phenolic resins, novolac resins, resorcinolic resins, unsaturated polyester resins, diallylphthalate resins, urea resins, melamine resins, benzoxazine resins, polyurethanes, and mixtures thereof.

From the viewpoint of an exceptional balance of strength, strain, modulus and environmental effect resistance, the use of epoxy resins may be advantageous, including mono-, di-functional, and higher functional (or multifunctional) epoxy resins and mixtures thereof. Multifunctional epoxy resins are preferably selected as they provide excellent glass transition temperature (Tg), modulus and even high adhesion to a reinforcing fiber. These epoxies are prepared from precursors such as amines (e.g., epoxy resins prepared using diamines and compounds containing at least one amine group and at least one hydroxyl group such as tetraglycidyl diaminodiphenyl methane, triglycidyl-p-aminophenol, triglycidyl-m-aminophenol, triglycidyl aminocresol and tetraglycidyl xylylenediamine and their isomers), phenols (e.g., bisphenol A epoxy resins, bisphenol F epoxy resins, bisphenol S epoxy resins, bisphenol R epoxy resins, phenol-novolac epoxy resins, cresol-novolac epoxy resins and resorcinol epoxy resins), naphthalene epoxy resins, dicyclopentadiene epoxy resins, epoxy resins having a biphenyl skeleton, tris(hydroxyphenol)methane based epoxies (Tactix® 742 by Huntsman), tetraglycidyl ether of glyoxal phenol novolac, fluorene based epoxies, isocyanate-modified epoxy resins and compounds having a carbon-carbon double bond (e.g., alicyclic epoxy resins). It should be noted that the epoxy resins are not restricted to the examples above. Halogenated epoxy resins prepared by halogenating these epoxy resins may also be used. Furthermore, mixtures of two or more of these epoxy resins, and compounds having one epoxy group (i.e., monoepoxy compounds) such as glycidylaniline, glycidyl toluidine or other glycidylamines (particularly glycidylaromatic amines) may be employed in the formulation of the thermosetting resin matrix.

Examples of commercially available bisphenol A epoxy resin products include jER® 825, jER® 828, jER®834, jER® 1001, jER® 1002, jER® 1003, jER® 1003F, jER® 1004, jER® 1004AF, jER® 1005F, jER® 1006FS, jER® 1007, jER® 1009, jER® 1010 (which are manufactured by Mitsubishi Chemical Corporation), and EPON® 825 and EPON® 828 (from Momentive). Examples of commercially available brominated bisphenol A epoxy resin products include jER® 505, jER® 5050, jER® 5051, jER® 5054 and jER® 5057 (which are manufactured by Mitsubishi Chemical Corporation). Examples of commercially available hydrogenated bisphenol A epoxy resin products include ST5080, ST4000D, ST4100D and ST5100 (which are manufactured by Nippon Steel Chemical Co., Ltd.).

Examples of commercially available bisphenol F epoxy resin products include jER® 806, jER® 807, jER® 4002P, jER® 4004P, jER® 4007P, jER® 4009P and jER® 4010P (which are manufactured by Mitsubishi Chemical Corporation), and Epotohto® YDF2001, Epotohto® YDF2004 (which are manufactured by Nippon Steel Chemical Co., Ltd.), and EPON® 830 (from Dainippon Ink and Chemicals, Inc.). An example of a commercially available tetramethyl-bisphenol F epoxy resin product is YSLV-80XY (manufactured by Nippon Steel Chemical Co., Ltd.).

An example of a bisphenol S epoxy resin is Epiclon® EXA-154 (manufactured by DIC Corporation).

Examples of commercially available tetraglycidyl diaminodiphenyl methane resin products include Sumiepoxy® ELM434 (manufactured by Sumitomo Chemical Co., Ltd.), YH434L (manufactured by Nippon Steel Chemical Co., Ltd.), jER® 604 (manufactured by Mitsubishi Chemical Corporation), and Araldite® MY720, MY721, and MY722 (which are manufactured by Huntsman Advanced Materials). Examples of commercially available triglycidyl aminophenol or triglycidyl aminocresol resin products include Sumiepoxy® ELM100 (manufactured by Sumitomo Chemical Co., Ltd.), Araldite® MY0500, MY0510 and MY0600, MY0610 (which are manufactured by Huntsman Advanced Materials) and jER® 630 (manufactured by Mitsubishi Chemical Corporation). Examples of commercially available tetraglycidyl xylylenediamine products and hydrogenated products thereof include TETRAD-X and TETRAD-C (which are manufactured by Mitsubishi Gas Chemical Company, Inc.).

Examples of commercially available phenol-novolac epoxy resin products include jER® 152 and jER® 154 (which are manufactured by Mitsubishi Chemical Corporation), and Epiclon® N-740, N-770 and N-775 (which are manufactured by DIC Corporation).

Examples of commercially available cresol-novolac epoxy resin products include Epiclon® N-660, N-665, N-670, N-673 and N-695 (which are manufactured by DIC Corporation), and EOCN-1020, EOCN-102S and EOCN-104S (which are manufactured by Nippon Kayaku Co., Ltd.).

An example of a commercially available resorcinol epoxy resin product is Denacol® EX-201 (manufactured by Nagase ChemteX Corporation).

Examples of commercially available naphthalene epoxy resin products include HP-4032, HP4032D, HP-4700, HP-4710, HP-4770, HP-5000, EXA-4701, EXA-4750, and EXA-7240 (which are manufactured by DIC Corporation) and MY0816 (which is manufactured by Huntsman).

Examples of commercially available dicyclopentadiene epoxy resin products include Epiclon® HP7200, HP7200L, HP7200H and HP7200HH (which are manufactured by DIC Corporation), Tactix® 558 (manufactured by Huntsman Advanced Material), and XD-1000-1L and XD-1000-2L (which are manufactured by Nippon Kayaku Co., Ltd.).

Examples of commercially available epoxy resin products having a biphenyl skeleton include jER® YX4000H, YX4000 and YL6616 (which are manufactured by Mitsubishi Chemical Corporation), and NC-3000 (manufactured by Nippon Kayaku Co., Ltd.).

Examples of commercially available isocyanate-modified epoxy resin products include AER4152 (manufactured by Asahi Kasei Epoxy Co., Ltd.) and ACR1348 (manufactured by ADEKA Corporation), each of which has an oxazolidone ring.

Suitable epoxy resins may be solid, semi-solid or liquid at room temperature (23°C). Mixtures of solid, semi-solid and/or liquid epoxy resins may be used.

Other types of suitable epoxy resins include glycidylaniline such as GAN (manufactured by Nippon Kayaku Co., Ltd.), glycidyl toluidine such as GOT (manufactured by Nippon Kayaku Co., Ltd.), and tetraglycidyldiaminodiphenylmethane such as Araldite (registered trademark) MY9655 (manufactured by Huntsman Advanced Materials).

Thermoplastic Particles

Particles of one or more thermoplastics are employed in the thermosettable resin compositions, together with thermosettable resin(s) and optionally one or more other components such as hardeners. The shape and form of such particles are not particularly limited. For example, the particles may be in powder and/or fiber form. The shape or form of the thermoplastic particles may also be spherical, non-spherical, porous, solid, hollow, needle-shaped, whisker-shaped or flake-shaped.

If thermoplastic resin fibers are used, such fibers can be short fibers or long fibers. For the case of short fibers, a method of using fibers in the same manner as particles as shown in JP02-69566A, or a method of processing in a mat is possible. For the case of long fibers, a method of orienting the long fibers horizontally on the surface of the prepreg as shown in JP04-292634A, or a method of randomly orienting the fibers as shown in WO94016003A can be used. Furthermore, the fibers can be processed and used as a sheet type substrate such as a weave as shown in JP02-32843A, or as a nonwoven material or knit as shown in WO94016003A. Furthermore, a method can be used where short fiber chips, chopped strands, milled fibers, and short fibers are spun as thread and then horizontally or randomly oriented to form a weave or knit.

The thermoplastic particles should be selected such that they are not dissolved in the thermosettable resin(s) at 25°C, but rather remain as discrete particles when combined with the other components of the thermosettable resin composition used to impregnate a fiber layer to form a prepreg. In addition to one or more thermoplastic resins, the particles may be comprised of one or more additional components, including any of the additives typically employed in thermoplastics such as fillers, and stabilizers.

Preferably, the particle size of the thermoplastic particles is within the range of 5 microns to 50 microns. In particular, a particle size distribution of the thermoplastic particles may be measured by a laser diffraction scattering method and a cumulative curve determined with the total volume as 100%, wherein a particle diameter of the thermoplastic particles having a cumulative curve of 90% is between 5 and 50 microns. More specifically, it is preferable that the particle diameter size is between 5 to 25 microns to render the resulting prepreg particularly suitable for out of autoclave processing. During the OOA cure process, resin flow generally is required to fill in the gaps in the prepreg. Overly large thermoplastic particles (particle size >25 microns) can interfere with such resin flow and can cause issues such as the production of laminate having high void content.

The thermoplastic resin of the thermoplastic particles can be crystalline or amorphous. In particular, at least one type of thermoplastic resin is used to form the thermoplastic particles which is selected from the group consisting of polyamides, polycarbonates, polyacetals, polyphenylene oxides, polyphenylene sulfides, polyarylates, polyesters, polyamideimides, polyimides, polyetherimides, polyimides with a phenyltrimethylindane structure, polysulfones, polyethersulfones, polyetherketones, polyetheretherketones, polyaramids, polyethernitriles, and polybenzimidazoles. Polyamide particles are particularly preferred for use in the present invention. Among the polyamides, nylon 12, nylon 11, nylon 6, nylon 6/12 copolymer, and a nylon (semi-IPN nylon) modified to have a semi-IPN (interpenetrating polymer network) with an epoxy compound as disclosed in Example 1 of Japanese Patent Application Laid-open No. 1-104624 impart particularly good adhesive strength in combination with the epoxy resin, and nylon 6/12 copolymers impart particularly favorable adhesion strength to the thermosettable resin composition.

The amount of thermoplastic particles is preferably 20 weight % or less with regards to the total weight of the prepreg sheet and/or is preferably 1 weight % or more with regards to the total weight of the prepreg sheet. The thermosettable resin composition more preferably has a content of thermoplastic particles of from 5 wt% to 15 wt%.

Soluble Thermoplastic Resins

According to certain aspects of the invention, the thermosettable resin composition may comprise, in addition to at least one thermosettable resin and thermoplastic particles, at least one thermoplastic resin blended into and dissolved in the thermosettable resin (hereinafter sometimes referred to as a "soluble thermoplastic resin"), in order to provide improved effects such as enhancing the toughness of the matrix resin when cured and at the same time controlling the viscosity of the thermosettable resin composition to improve prepreg permeability during prolonged out-time and storage conditions. Furthermore, the soluble thermoplastic resin can be crystalline or amorphous. In particular, at least one type of soluble thermoplastic resin is used which is selected from the group consisting of polyamides, polycarbonates, polyacetals, polyphenylene oxides, polyphenylene sulfides, polyarylates, polyesters, polyamideimides, polyimides, polyetherimides, polyimides with a phenyltrimethylindane structure, polysulfones, polyethersulfones, polyetherketones, polyetheretherketones, polyaramids, polyethernitriles, and polybenzimidazoles. These soluble thermoplastic resins can be commercial polymers, or so-called oligomers with a lower molecular weight than commercial polymers.

A soluble thermoplastic resin having a number average molecular weight of 10,000 to 70,000 g/mol is preferably used, more preferably 20,000 to 60,000 g/mol, and most preferably 40,000 to 60,000 g/mol. When a thermoplastic resin having a number average molecular weight within the preferred range is used and dissolved in a thermosettable resin, a large amount of the soluble thermoplastic resin can be incorporated as long as the prepreg process is not compromised. As a result, good resin flow, high toughness, and high tensile strength can be achieved in the cured fiber-reinforced composite material obtained therefrom.

Furthermore, the formulation amount of these soluble thermoplastic resins in the thermosettable resin composition is preferably between 5 and 30 weight parts, more preferably between 10 and 25 weight parts, and most preferably between 10 and 23 weight parts, per 100 weight parts of thermosettable resin (e.g., epoxy resin). If the formulation amount of thermoplastic resin is too low, there is a possibility that toughness could be lost. If the formulation amount of the thermoplastic resin is too high, toughness could be improved although processability could potentially be lost due to the significant increase in resin viscosity causing extreme processing conditions.

Suitable soluble thermoplastic resins include, for example, polyethersulfone with a terminal hydroxyl group, such as "Sumikaexcel (registered trademark)" PES5003P (manufactured by Sumitomo Chemical Co., Ltd.) having a number average molecular weight of 47,000 g/mol.

Hardeners

The thermosettable resin composition may and preferably does contain one or more hardeners capable of curing the thermosettable resin(s). The hardener(s) for epoxy resin(s) can be any compound with an active group that can react with an epoxy group. Compounds with at least one amino group, acid anhydride group, or azide group are suitable as hardeners, for example. More specific examples of hardeners include various isomers of diamino diphenyl sulfone, amino benzoate esters, various types of acid anhydrides, phenol novolac resins, cresol novolac resins, polyphenol compounds, imidazole derivatives, aliphatic amines, tetramethyl guanidine, thiourea adduct amines, methylhexahydrophthalic anhydride, and other carboxylic acid anhydrides, carboxylic acid hydrazides, carboxylic acid amides, polymercaptans, and boron trifluoride ethylamine complexes, and other Lewis acid complexes. These hardeners can be used individually or in combination.

By using an aromatic diamine as the hardener, a cured resin with favorable heat resistance can be obtained. In particular, various isomers of diamino diphenyl sulfone provide a cured resin with favorable heat resistance, and therefore are most suitable. The amount of aromatic diamine hardener that is added is preferably a stoichiometric equivalent amount (relative to the epoxy content of the epoxy resin) but in some cases, a cured resin with high modulus of elasticity can be obtained by using an equivalent ratio (hardener : epoxy) of approximately 0.7 to 1.0.

The glass transition temperature of the cured matrix resin influences the heat resistance of the fiber-reinforced composite material. It is preferred that the cured product of the epoxy resin composition of the present invention has a high glass transition temperature. Specifically, it is preferred that the glass transition temperature of the cured material obtained be at least 200°C.

Uses for Prepreg Sheets

The prepreg sheets of the present invention are useful in the preparation of laminate bodies (prepreg stacks) that are molded and cured to provide fiber-reinforced composite materials and articles. Such laminate bodies have one or more permeable pathways (inter-laminar air paths) between prepreg sheets created by modification of the prepreg sheets to have one or more of attributes a)-d):

a) at least one of the outer surfaces of the prepreg sheet has an average surface roughness $R_a$ of from 3 $\mu$m to 8 $\mu$m;
b) at least one of the outer surfaces of the prepreg sheet has a thermoplastic particle exposure percentage of from 20% to 80%;
c) when laid up in multiple plies the prepreg sheet provides a prepreg stack having a laminate lengthwise gas permeability in a direction parallel to the plane of the prepreg sheet which is greater than 5.5 x$10^{-14}$ m$^2$ at a laminate length of 1 m;
d) a ratio of B/A of at least 0.5, wherein B is the laminate lengthwise gas permeability in a direction parallel to the plane of the prepreg sheet at a laminate length of 1 m and A is the in-plane gas permeability in a direction parallel to the plane of the prepreg sheet which is exhibited by a prepreg stack provided by laying up multiple plies of the prepreg sheet.

The prepreg sheets in accordance with the present invention are particularly useful for the preparation of fiber-reinforced composite materials and structures using automated layup methods. Such automated layup methods are increasingly being employed in the industry in order to increase production rates and to facilitate the fabrication of large structures. The inventive prepreg sheets may, for example, be employed using fabrication techniques such as Automated Fiber Placement (AFP) and Automated Tape Layup (ATL).

Prepreg sheets in accordance with the present invention are also suitable for use in out-of-autoclave procedures for forming fiber-reinforced composite materials and structures. Generally speaking, such methods can be described as involving the molding and curing of prepreg stacks (laminate bodies) to provide fiber-reinforced composite materials and structures using only a vacuum pump and oven, without using an autoclave. The conventional method of manufacturing fiber-reinforced composite materials is thermocompression molding using an autoclave, but such methods have certain recognized drawbacks such as high molding costs, the need for large molding equipment, and restrictions on the molding size because of equipment. The present inventive prepreg sheets thus provide a way to avoid such issues. According to one aspect of the present invention, a method for manufacturing a fiber-reinforced composite material comprises: laying up inventive prepreg sheets and molding the prepreg sheets using a vacuum pump and oven. For example, such a method may comprise laying up inventive prepreg sheets and molding the prepreg sheets (in the form of a prepreg stack, for example), wherein molding comprises degassing at a temperature between about 20 and about 50° C and at a degree of vacuum of about 10 kPa or less (here, the degree of vacuum refers to absolute pressure, which is zero-referenced against a perfect vacuum), and curing by increasing the temperature to a curing temperature (e.g., a temperature effective to achieve curing of the thermosettable resin composition present in the prepreg sheets, which is typically from about 60°C to about 180°C) while maintaining the degree of vacuum at about 10 kPa or less.

Heating may be performed using a device such as an oven, autoclave, or press. From the perspective of low cost, an oven is preferably used. If the prepreg of the present invention is heated and cured in an oven, a molding method is used where a laminate formed by laying up a plurality of plies (prepreg sheets), and the laminate (prepreg stack) is bagged and degassed at a temperature between 20 and 50° C, where the degree of vacuum inside the bag is 11 kPa or more, and the temperature is raised to the curing temperature (e.g., 60°C to 180°C) while preferably maintaining the degree of vacuum at 11 kPa or more. If the degree of vacuum is lower than 11 kPa, the flow of matrix resin in the prepreg may be insufficient. As a result, the unimpregnated reinforcing fibers may not be impregnated with the matrix resin (the thermosettable resin composition) during prepreg curing, so many voids might occur in the fiber-reinforced composite material obtained. Herein, degassing is preferably performed at conditions where the degree of vacuum is preferably between 0.1 kPa and 11 kPa, more preferably between 0.1 kPa and 7 kPa. In certain embodiments of the invention, the curing temperature is between 120 and 200° C, and more preferably between 130 and 180° C. If the curing temperature is too low, the curing time will be long, which may lead to high costs. However, if the curing temperature is too high, excessive thermal shrinkage while cooling from the curing temperature to room temperature may take place, and there is a possibility that the mechanical properties of the fiber-reinforced composite material obtained will be inferior.

When increasing the temperature from the initial temperature to the curing temperature, the temperature can be increased at a constant rate up to the curing temperature, or the temperature can be maintained at an intermediate dwell temperature for a fixed period of time and then increased to the curing temperature. In this manner, a curing method where an intermediate temperature is maintained for a fixed period of time and then the temperature is increased to the curing temperature is referred to as step curing. During step curing, the temperature that is maintained for a fixed period of time may be, for example, between 60 and 160° C, or between 80 and 150° C, or between 90 and 140° C. Maintaining an intermediate temperature for a fixed period of time in this manner may help to ensure prepreg consolidation due to sufficient flow of the matrix resin and ensures the required time. Therefore, volatile components from the prepreg and air trapped during layup of the prepreg sheets, which are factors that hinder the consolidation process, can be efficiently removed. If the temperature that is maintained for a fixed period of time is too low, the flow of matrix resin in the prepreg stack may be too little and the unimpregnated reinforcing fibers may not be sufficiently impregnated with the resin; the consolidation process might therefore terminate prematurely. If the temperature that is maintained for a fixed period of time is too high, the quantity of volatile components from the matrix resin may greatly increase, which may also hinder the consolidation process.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

Although the invention is illustrated and described herein with reference to specific embodiments, the invention is not intended to be limited to the details shown.

Examples

Table 1 (Comparative Examples) and Table 2 (Working Examples) set forth certain details regarding the components used to prepare the prepregs described in the Examples, as well as the properties of the prepregs and fiber-reinforced composites obtained therefrom.

Working Examples 1, 4 and 7 and Comparative Examples 1-3

Working Examples 1, 4 and 7 and Comparative Examples 1 to 3 each used a precursor prepreg sheet made with 27.5 weight parts of PES5003P polyethersulfone added and dissolved in 60 weight parts of Araldite (registered trademark) MY9655 and 40 weight parts of combined Epon (registered trademark) 825 and Epon (registered trademark) 830 in a kneader, and then 45 weight parts of Aradur (registered trademark) 9664-1 4,4'-DDS kneaded in as a hardener. After this, 15 weight parts of 5 to 50 microns size polyamide thermoplastic particles (manufactured by Toray Industries, Inc.) is added and kneaded to produce a thermosettable resin composition. The thermosettable resin composition thus produced was applied onto release paper using a knife coater to produce two sheets of 52.0 g/m$^2$ resin film. Next, the aforementioned two sheets of fabricated resin film were overlaid on both sides of unidirectional oriented carbon fibers with a density of 1.8 g/cm$^2$ in the form of a sheet (T800S-24K-10E) and the thermosettable resin composition was impregnated into the sheet of carbon fibers using a roller temperature between 110°C and 130°C and a roller pressure between 0.10 MPa-0.40 MPa (Comparative Example 1 and Working Example 7 used a roller temperature of 130°C and a roller pressure of 0.40 MPa, Comparative Example 2 and Working Example 4 used a roller temperature of 120°C and a roller pressure of 0.3MPa, Comparative Example 3 and Working Example 1 used a roller temperature of 110°C and a roller pressure of 0.1MPa) to produce a unidirectional prepreg with a carbon fiber area weight of 190 g/m$^2$ and a matrix resin weight fraction of 35%. Working Example 7 and Comparative Example 1, Working Example 4 and Comparative Example 2, and Working Example 1 and Comparative Example 3 all have different impregnation levels as defined by the difference in roller temperature and roller compaction pressure. The impregnation level is defined as water pickup level which are 2%, 4% and 7% corresponding to the Working Examples 7, 4 and 1, and Comparative Examples 1-3 respectively. An additional step was applied to the precursor prepreg sheets for Working Examples 7, 4 and 1, which were conditioned in the vacuum oven at a vacuum pressure of 10 kPa or less and a vacuum temperature of 22°C for 180 minutes providing a surface roughness of 3.5 microns and a 20.5% particle exposure.

A 1m width by 1m length laminate body (prepreg stack) was fabricated by laying up 35 plies of the aforementioned prepreg at room temperature and molded using a vacuum bag only process as defined below by placing it into a vacuum envelope and degassing for three hours at room temperature with a degree of vacuum of about 0.1 kPa. After degassing is complete, the laminate body was brought from room temperature to 120°C at a rate of 1.7°C/min and held at 120°C for 120 minutes and then finally cured at a rate of 1.7°C/min to 180°C for 120 minutes to provide a consolidated fiber-reinforced composite.

In comparison to Comparative Examples 1 to 3 which provided prepregs having a surface roughness of 2 microns and 0% thermoplastic particle exposure, the Working Examples showed improvement in both in-plane gas permeability (A) and laminate lengthwise gas permeability at 1m (B). The ratio of gas permeability (Ratio=B/A) at 0m and 1m improves from 0.03-0.25 to 0.71 to 0.85 regardless of the impregnation level (water pickup). More importantly, the void contents for the 1m$^2$ large panels of the Working Examples were less than 1% in the cured composite laminate, whereas the Comparative Examples yielded cured composite laminates having a void content greater than 2% in all instances.

Working Examples 4, 5 and 6 and Comparative Example 4

These examples all have a prepreg impregnation level of 4% (water pickup). The precursor prepreg sheets for Working Examples 4, 5 and 6 are conditioned in a vacuum oven with a vacuum pressure of approximately 0.1 kPa and an oven temperature between 22° C and 70° C and a vacuum time of 60min to 960min (Working Example 4 - temperature 22° C for 180min, Working Example 5 - temperature 22° C for 960min and Working Example 6 - temperature 70° C for 60min). The surface roughness (Ra) values for these examples changed from 2 microns for the Comparative Examples to 3.5 microns, 6 microns and 7.5 microns for Working Examples 4, 5 and 6 respectively. The percentage of thermoplastic particle exposure has also increased to 20.5%, 48.8% and 78.7% respectively. For Comparative Example 4, the precursor prepreg sheet was conditioned at a vacuum pressure of 0.1kPa at 80°C for 60min, which provided a surface roughness (Ra) of 10 microns and a thermoplastic particle exposure of 90%.

In comparing Comparative Example 4 to Working Examples 4, 5 and 6, in all cases both the in-plane gas permeability (A) and the laminate lengthwise gas permeability at 1m (B) are greater than 5.5 X10$^{-14}$m$^2$ and the ratio of the gas permeability at 0m and 1m laminate length (B/A) is in each case greater than 0.5. Even though the void contents for large panels are less than 1% in all these examples, Comparative Example 4 exhibited a significant decrease in prepreg surface tack quality. The prepreg surface tack quality is an essential feature for successful lay down of the prepreg material.

In other words, having a high surface roughness and high particle exposure is good for an out of autoclave cure process; however, the ability to handle and lay down the prepreg dramatically decreases.

Working Examples 7, 8 and 9 and Comparative Example 1

These examples all have a prepreg impregnation level of 2% (water pickup). The precursor prepreg sheets for Working Examples 7, 8 and 9 were conditioned in a vacuum oven with a vacuum pressure of approximately 0.1 kPa and an oven temperature between 22° C and 70° C and a vacuum time of 60min to 960min (Working Example 7 - temperature 22° C for 180min, Working Example 8 - temperature 22° C for 960min and Working Example 9 - temperature 70° C for 60min). The surface roughness (Ra) values for these examples changed from 2 microns for the Comparative Examples to 3.5 microns, 6 microns and 7.5 microns for Working Examples 7, 8 and 9 respectively. The percentage of thermoplastic particle exposure has also increased to 20.5%, 48.8% and 78.7% respectively. For Comparative Example 1, the precursor prepreg sheet was not conditioned, hence the particle exposure percentage is 0% and the surface roughness (Ra) is 2 microns.

In comparing Comparative Example 1 to Working Examples 7, 8 and 9, the in-plane gas permeability(A) and the laminate lengthwise gas permeability at 1m (B) are greater than $5.5 \times 10^{-14}$ m$^2$ and the ratio of the gas permeability at 0m and 1m laminate length (B/A) is in each case greater than 0.5 for Working Examples 7,8 and 9. On the other hand, Comparative Example 1 had an in-plane gas permeability (A) of less than $5.5 \times 10^{-14}$ m$^2$ and the ratio of gas permeability at 0m and 1m laminate length(B/A) was less than 0.5.

Working Examples 1, 2 and 3 and Comparative Example 3

These examples all have a prepreg impregnation level of 7% (water pickup). The precursor prepreg sheets for Working Examples 1, 2 and 3 were conditioned in a vacuum oven with a vacuum pressure of approximately 0.1 kPa and an oven temperature between 22° C and 70° C and a vacuum time of 60min to 960min (Working Example 1 - temperature 22° C for 180min, Working Example 2 - temperature 22° C for 960min and Working Example 3 - temperature 70° C for 60min). The surface roughness (Ra) values for these examples changed from 2 microns for the Comparative Examples to 3.5 microns, 6 microns and 7.5 microns for Working Examples 1, 2 and 3 respectively. The percentage of thermoplastic particle exposure has also increased to 20.5%, 48.8% and 78.7% respectively. For Comparative Example 3, the precursor prepreg sheet was not conditioned, hence the particle exposure percentage is 0% and the surface roughness (Ra) is 2 microns.

In comparing Comparative Example 3 to Working Examples 1, 2 and 3, the in-plane gas permeability(A) and the laminate lengthwise gas permeability at 1m (B) are greater than $5.5 \times 10^{-14}$ m$^2$ and the ratio of the gas permeability at 0m and 1m laminate length (B/A) is in each case greater than 0.5 for Working Examples 1, 2 and 3. On the other hand, Comparative Example 3 had an in-plane gas permeability (A) of less than $5.5 \times 10^{-14}$ m$^2$ and the ratio of gas permeability at 0m and 1m laminate length(B/A) was less than 0.5.

Working Examples 10, 11 and 12 and Comparative Examples 2 and 5

These examples all had a prepreg impregnation level of 4% (water pickup). The amount of inter-laminar toughening particles (thermoplastic particles) has been increased from 15 weight parts to 20 weight parts for Comparative Examples 2 and 5 respectively. Since the prepregs obtained in both of these Comparative Examples do not have any surface treatment (roughness of 0 microns and 0% particle exposure), the in-plane gas permeability and laminate lengthwise gas permeability are both less than $5.5 \times 10^{-14}$ m$^2$. The precursor prepregs for Working Examples 10, 11 and 12 were all conditioned using a vacuum oven with a vacuum pressure of approximately 0.1 kPa and an oven temperature between 22° C and 70° C and a vacuum time of 60min to 960min (Working Example 10 - temperature 22° C for 180min, Working Example 11 - temperature 22°C for 960min and Working Example 12 - temperature 70° C for 60min). The surface roughness (Ra) for these examples changed from 2 microns for the Comparative Examples to 3.5 microns, 6 microns and 7.5 microns for Working Examples 2, 5 and 8, respectively. The thermoplastic particle exposure has also increased to 20.5%, 48.8% and 78.7%, respectively. It can be noticed that regardless of the thermoplastic particle content the amount of surface roughness has improved and similar thermoplastic particle exposure is observed with the defined vacuum conditions. Both the in-plane gas permeability and laminate lengthwise gas permeability have increased and the ratio of the lengthwise to in-plane gas permeability (B/A) is greater than 0.5. For Working Examples 10, 11 and 12, the void ratio for a large panel fabrication was less than 1%.

Working Example 5 and Comparative Examples 6 and 7

These examples all have a prepreg impregnation level of 4% (as measured by water pickup). The prepreg sheets contain thermoplastic particles having different particle diameters. Working Example 5 contains thermoplastic particles having a particle diameter of 20 microns, whereas the Comparative Examples 6 and 7 contain thermoplastic particles having a particle diameter of 30 microns and 50 microns, respectively. For all examples, the prepreg sheet is conditioned in the same manner. These precursor prepreg sheets were conditioned in a vacuum oven with a vacuum pressure of approximately 0.1 kPa and temperature of 22° C for 960min. The surface roughness of the prepreg sheet of Working Example 5 is 6 microns and the surface roughnesses of the prepreg sheets of Comparative Examples 6 and 7 are 6.3 microns and 6.7 microns, respectively, which are considered equivalent to each other. All comparative examples and working examples satisfy the in-plane gas permeability and laminate lengthwise gas permeability ratio. Regardless of the surface roughness and laminate lengthwise gas permeability, it was observed that the laminate void content was high (1.1% and 1.3%) for Comparative Examples 6 and 7 and low (0.5%) for Working Example 5, which indicates that the average particle size of the thermoplastic particles affects the quality of the laminate. If the particle diameter size is too large, the resin content for the laminate will not be sufficient for the laminate, causing high void content due to insufficient resin.

Table 1 - Comparative Examples.

| | | | Unit | C.E 1 | C.E 2 | C.E 3 | C.E 4 | C.E 5 | C. 6 | C.E 7 |
|---|---|---|---|---|---|---|---|---|---|---|
| **Thermosettable resin** | | MY9655 | | 60 | 60 | 60 | 60 | 60 | 60 | 60 |
| | Epoxy | EPON830 + EPON825 | | 40 | 40 | 40 | 40 | 40 | 40 | 40 |
| | Curative | 4-4' DDS | | 44 | 44 | 44 | 44 | 44 | 44 | 44 |
| | Additive | PES5003P | | 27. 5 | 27.5 | 27.5 | 27.5 | 27.5 | 27.5 | 27.5 |
| **Thermoplastic particles** | Interlayer toughening material | PA | | 15 | 15 | 15 | 15 | 20 | 15 | 15 |
| **Epoxy Resin Properties** | Thermosettable resin viscosity at 30° C | | (Pa·s) | 10511 | 10511 | 10511 | 10511 | 10511 | 10511 | 10511 |
| | Minimum viscosity of thermosettable resin | | (Pa s) | 0.6 | 0.6 | 0.6 | 0.6 | 0.6 | 0.6 | 0.6 |
| | Resin content | | (wt%) | 33. 5 | 33. 5 | 33. 5 | 33. 5 | 35 | 33. 5 | 33. 5 |
| | Particle diameter | | ($\mu$m) | 20 | 20 | 20 | 20 | 20 | 30 | 50 |
| | Fiber areal weight | | (g/m$^2$) | 190 | 190 | 190 | 190 | 190 | 190 | 190 |
| | Water Pickup | | (%) | 1.8 | 4 | 7 | 4 | 4 | 4 | 4 |
| | Surface Roughness (Ra) | | ($\mu$m) | 2 | 2 | 2 | 10 | 2 | 6.3 | 6.7 |
| | Thermoplastic Particle Exposure Percentage | | (%) | 0 | 0 | 0 | 90 | 0 | 55 | 55 |
| | In-plane Gas Permeability (A) | | (m$^2$) | 1. 90E-14 | 4.00E-14 | 8.00E-14 | 2.50E-13 | 4.00E-14 | 1. 1E-13 | 1. 2E-13 |
| | Laminate lengthwise gas perme-ability at 1m (B) | | (m$^2$) | 1. 00E-15 | 1.00E-15 | 2.00E-14 | 2.00E-13 | 1. 00E-15 | 8. 7E-14 | 9. 4E-14 |
| | Ratio of B/A | | | 0.05 | 0.03 | 0.25 | 0.80 | 0.03 | 0.79 | 0.78 |
| | Tack (>1), Good:3, Fair:2, Bad:1 | | | 3 | 3 | 3 | 1 | 3 | 3 | 3 |
| **Fiber Reinforced Composite Material Properties** | Void content for large panel [1m$^2$] | | (%) | 4.5 | 3.2 | 2. 5 | 0.5 | 3.3 | 1.1 | 1.3 |

EP 3 746 500 B1

Table 2 - Working Examples.

| | | | Unit | Ex. 1 | Ex. 2 | Ex. 3 | Ex. 4 | Ex. 5 | Ex. 6 |
|---|---|---|---|---|---|---|---|---|---|
| **Thermosettable resin** | Epoxy | MY9655 | | 60 | 60 | 60 | 60 | 60 | 60 |
| | | EPON830 + EPON825 | | 40 | 40 | 40 | 40 | 40 | 40 |
| | Curative | 4-4' DDS | | 44 | 44 | 44 | 44 | 44 | 44 |
| | Additive | PES5003P | | 27.5 | 27.5 | 27.5 | 27.5 | 27.5 | 27.5 |
| **Thermoplastic particles** | Interlayer toughening material | PA | | 15 | 15 | 15 | 15 | 15 | 15 |
| **Epoxy Resin Properties** | Thermosettable resin viscosity at 30° C | | (Pa·s) | 10511 | 10511 | 10511 | 10511 | 10511 | 10511 |
| | Minimum viscosity of thermosettable resin | | (Pa·s) | 0.6 | 0.6 | 0.6 | 0.6 | 0.6 | 0.6 |
| | Resin content | | (wt%) | 33.5 | 33.5 | 33.5 | 33.5 | 33.5 | 33.5 |
| | Fiber areal weight | | (g/m$^2$) | 190 | 190 | 190 | 190 | 190 | 190 |
| | Particle Diameter | | ($\mu$m) | 20 | 20 | 20 | 20 | 20 | 20 |
| | Water Pickup | | (%) | 7 | 7 | 7 | 4 | 4 | 4 |
| | Surface Roughness (Ra) | | ($\mu$m) | 3.5 | 6 | 7.5 | 3.5 | 6 | 7.5 |
| | Thermoplastic Particle Exposure Percentage | | (%) | 20.5 | 48.8 | 78.7 | 20.5 | 48.8 | 78.7 |
| | In-plane Gas Permeability (A) | | (m$^2$) | 1.20E-13 | 1.40E-13 | 1.90E-13 | 9.00E-14 | 1.10E-13 | 1.80E-13 |
| | Laminate lengthwise gas permeability at 1m (B) | | (m$^2$) | 3.50E-14 | 1.20E-13 | 1.55E-13 | 7.80E-14 | 8.00E-14 | 1.50E-13 |
| | B/A | | | 0.71 | 0.86 | 0.87 | 0.87 | 0.73 | 0.83 |
| | Tack (>1), Good:3, Fair:2, Bad:1 | | | 3 | 3 | 2 | 3 | 3 | 2 |
| **Fiber Reinforced Composite Material Properties** | Void content for large panel [1m$^2$] | | (%) | 0.5 | 0.6 | 0.3 | 0.7 | 0.5 | 0.4 |

EP 3 746 500 B1

19

Table 2 (Continued) - Working Examples

| | | Unit | Ex. 7 | Ex. 8 | Ex. 9 | Ex. 10 | Ex. 11 | Ex. 12 |
|---|---|---|---|---|---|---|---|---|
| | Epoxy | MY9655 | | 60 | 60 | 60 | 60 | 60 | 60 |
| **Thermosettable resin** | EPON830 + EPON825 | | 40 | 40 | 40 | 40 | 40 | 40 |
| | Curative | 4-4' DDS | | 44 | 44 | 44 | 44 | 44 | 44 |
| | Additive | PES5003P | | 27.5 | 27.5 | 27.5 | 27.5 | 27.5 | 27.5 |
| **Thermoplastic particles** | Interlayer toughening material | PA | | 15 | 15 | 15 | 20 | 20 | 20 |
| **Epoxy Resin Properties** | Thermosettable resin viscosity at 30° C | (Pa·s) | 10511 | 10511 | 10511 | 10511 | 10511 | 10511 |
| | Minimum viscosity of thermosettable resin | (Pa·s) | 0.6 | 0.6 | 0.6 | 0.6 | 0.6 | 0.6 |
| | Resin content | (wt%) | 33. 5 | 33. 5 | 33. 5 | 35 | 35 | 35 |
| | Fiber areal weight | (g/m$^2$) | 190 | 190 | 190 | 190 | 190 | 190 |
| | Particle diameter | ($\mu$m) | 20 | 20 | 20 | 20 | 20 | 20 |
| | Water Pickup | (%) | 2 | 2 | 2 | 4 | 4 | 4 |
| | Surface Roughness (Ra) | ($\mu$m) | 3.5 | 6 | 7.5 | 3.5 | 6 | 7.5 |
| | Thermoplastic Particle Exposure Percentage | (%) | 20.5 | 48.8 | 78.7 | 20.5 | 48.8 | 78.7 |
| | In-plane Gas Permeability (A) | (m$^2$) | 7.20E-14 | 1. 20E-13 | 1. 50E-13 | 8.50E-14 | 1. 00E-13 | 1. 70E-13 |
| | Laminate lengthwise gas permeability at 1m (B) | (m$^2$) | 5.90E-14 | 7.50E-14 | 1.10E-13 | 7.30E-14 | 8.50E-14 | 1. 20E-13 |
| | B/A | | 0.82 | 0.63 | 0.73 | 0.86 | 0. 85 | 0. 71 |
| | Tack (>1), Good:3, Fair:2, Bad:1 | | 3 | 3 | 2 | 3 | 3 | 2 |
| **Fiber Reinforced Composite Material Properties** | Void content for large panel [1m$^2$] | (%) | 0.8 | 0.7 | 0.3 | 0.4 | 0.6 | 0.4 |

**Claims**

1. A prepreg sheet having a first outer surface and a second outer surface defining a plane and which is comprised of a fiber layer impregnated with a thermosettable resin composition comprised of a thermosettable resin and thermoplastic particles, wherein the prepreg sheet when laid up in multiple plies provides a prepreg stack having an in-plane gas permeability in a direction parallel to the plane of the prepreg sheet and has at least one of attributes a) - d):

   a) at least one of the outer surfaces of the prepreg sheet has an average surface roughness $R_a$ of from 3 $\mu$m to 8 $\mu$m, the average surface roughness $R_a$ being determined as described herein;
   b) at least one of the outer surfaces of the prepreg sheet has a thermoplastic particle exposure percentage of from 20% to 80%;
   c) when laid up in multiple plies the prepreg sheet provides a prepreg stack having a laminate lengthwise gas permeability in a direction parallel to the plane of the prepreg sheet, determined as described herein, which is greater than 5.5 x$10^{-14}$ m$^2$ at a laminate length of 1 m;
   d) a ratio of B/A of at least 0.5, wherein B is the laminate lengthwise gas permeability in the direction parallel to the plane of the prepreg sheet at a laminate length of 1 m and A is the in-plane gas permeability in a direction parallel to the plane of the prepreg sheet, determined as described herein.

2. The prepreg sheet of claim 1, wherein the prepreg sheet has at least two of attributes a) - d), or,

   wherein the prepreg sheet has at least three of attributes a) - d), or,
   wherein the prepreg sheet has each of attributes a) - d).

3. The prepreg sheet of claim 1 or 2, where A is above 5.5 x $10^{-14}$ m$^2$, or,
   wherein the prepreg sheet has at least one of attributes a) or b) and both of attributes c) and d) and A is above 5.5 x $10^{-14}$ m$^2$.

4. The prepreg sheet of any one of claims 1 to 3, wherein the thermosettable resin composition has a minimum viscosity temperature and the prepreg sheet has been conditioned at a temperature which is from 20°C tor 80°C less than the minimum viscosity temperature of the thermosettable resin composition.

5. The prepreg sheet of any one of claims 1 to 4, wherein thermoplastic particles are exposed on at least one of the first outer surface or the second outer surface, or,

   wherein the thermoplastic particles have a particle size, measured by a laser diffraction scattering method, of between 5 microns and 25 microns, or,
   wherein the thermoplastic particles have a particle size distribution as measured by a laser diffraction scattering method such that when a cumulative curve is determined with the total volume as 100%, a particle diameter of the thermoplastic particles having a cumulative curve of 90% is between about 5 $\mu$m and about 20 $\mu$m.

6. The prepreg sheet of any one of claims 1 to 5, wherein the thermosettable resin composition is comprised of from 5 to 15 % by weight thermoplastic particles, or,

   wherein the thermoplastic particles are comprised of a thermoplastic selected from the group consisting of polyamides, polysulfones, polyimides and polyesters, or,
   wherein the thermoplastic particles are comprised of a polyamide selected from the group consisting of nylon 12, nylon 11, nylon 6, nylon 6/12 copolymers, and nylons modified to have a semi-IPN (interpenetrating polymer network).

7. The prepreg sheet of any one of claims 1 to 6, wherein the prepreg sheet has a water pickup rate of from 2 to 7%.

8. The prepreg sheet of any one of claims 1 to 7, wherein the prepreg sheet is partially impregnated with the thermosettable resin composition to provide a fiber air path within the prepreg sheet.

9. A method of making a prepreg sheet in accordance with any one of claims 1 to 8, comprising impregnating a fiber layer with a thermosettable resin composition to form a precursor prepreg sheet wherein a first side of the precursor prepreg sheet is at least partially covered with the thermosettable resin composition and subjecting the precursor prepreg sheet to vacuum conditions at a temperature and for a time effective to produce the prepreg sheet.

10. The method of claim 9, wherein the temperature from is 20°C to 80°C and the time is from 0.1 hours to 24 hours, or,

    wherein the precursor prepreg sheet is subjected to a vacuum of 0.01MPa to 0.1MPa, or,
    wherein the temperature is from 20°C to 80°C, the time is from 0.1 hours to 24 hours and the precursor prepreg sheet is subjected to a vacuum of 0.01MPa to 0.1MPa.

11. A method of making a prepreg stack, comprising stacking a plurality of prepreg sheets in accordance with any one of claims 1 to 8.

12. A method of making a fiber-reinforced composite material, comprising curing a prepreg stack comprising a plurality of prepreg sheets in accordance with any one of claims 1 to 8, or,

    the method of making a fiber-reinforced composite material, wherein the curing is carried out in an oven, and/or, wherein the prepreg stack is positioned within a vacuum bag during curing.

13. A method of fabricating a fiber-reinforced composite structure, comprising:

    a) laminating a plurality of prepreg sheets in accordance with any of claims 1 to 8, in a stacking sequence, to form a prepreg stack; and
    b) consolidating and curing the prepreg stack, thereby forming a fiber-reinforced composite structure.

14. The method of claim 13 wherein said laminating to form a prepreg stack is carried out by an Automated Fiber Placement (AFP) system or Automated Tape Layup (ATL) system equipped with means for dispensing and compacting prepreg sheets directly on a molding surface for forming a fiber-reinforced composite structure.

**Patentansprüche**

1. Prepreg-Lage, die eine erste Außenfläche und eine zweite Außenfläche aufweist, die eine Ebene definieren, und die aus einer Faserschicht besteht, die mit einer wärmehärtbaren Harzzusammensetzung imprägniert ist, die aus einem wärmehärtbaren Harz und thermoplastischen Partikeln besteht, wobei die Prepreg-Lage, wenn sie in mehreren Lagen abgelegt wird, einen Prepreg-Stapel bildet, der eine Gaspermeabilität in der Ebene parallel zur Ebene der Prepreg-Lage aufweist, und mindestens eines der folgenden Merkmale a) bis d) aufweist:

    a) mindestens eine der Außenflächen der Prepreg-Lage weist eine durchschnittliche Oberflächenrauheit $R_a$ von 3 $\mu$m bis 8 $\mu$m auf, wobei die durchschnittliche Oberflächenrauheit $R_a$ wie hierin beschrieben bestimmt wird;
    b) mindestens eine der Außenflächen der Prepreg-Lage einen Expositionprozentsatz der thermoplastischen Partikel von 20 % bis 80 % aufweist;
    c) dass die Prepreg-Lage, wenn in mehreren Lagen abgelegt, einen Prepreg-Stapel bildet, der eine Laminat-Gaspermeabilität in Längsrichtung parallel zur Ebene der Prepreg-Lage aufweist, die wie hierin beschrieben bestimmt wird und bei einer Laminatlänge von 1 m mehr als 5,5 x $10^{-14}$ m$^2$ beträgt;
    d) ein Verhältnis von B/A von mindestens 0,5, wobei B die Gaspermeabilität des Laminats in Längsrichtung parallel zur Ebene der Prepreg-Lage bei einer Laminatlänge von 1 m ist und A die Gaspermeabilität in der Ebene parallel zur Ebene der Prepreg-Lage ist, bestimmt wie hierin beschrieben.

2. Prepreg-Lage nach Anspruch 1, wobei die Prepreg-Lage mindestens zwei der Merkmale a) bis d) aufweist, oder

    wobei die Prepreg-Lage mindestens drei der Merkmale a) bis d) aufweist, oder
    wobei die Prepreg-Lage jedes der Merkmale a) bis d) aufweist.

3. Prepreg-Lage nach Anspruch 1 oder 2, wobei A über 5,5 x $10^{-14}$ m$^2$ beträgt, oder wobei die Prepreg-Lage mindestens eines der Merkmale a) oder b) und beide der Merkmale c) und d) aufweist und A über 5,5 x $10^{-14}$ m$^2$ beträgt.

4. Prepreg-Lage nach einem der Ansprüche 1 bis 3, wobei die wärmehärtbare Harzzusammensetzung eine Mindestviskositätstemperatur aufweist und die Prepreg-Lage bei einer Temperatur konditioniert wurde, die 20 °C bis 80 °C weniger als die Mindestviskositätstemperatur der wärmehärtbaren Harzzusammensetzung beträgt.

5. Prepreg-Lage nach einem der Ansprüche 1 bis 4, wobei auf mindestens einer von der ersten Außenfläche oder der zweiten Außenfläche thermoplastische Partikel exponiert sind, oder

wobei die thermoplastischen Partikel eine Partikelgröße, gemessen mittels einem Laserbeugungsstreuungsverfahren, zwischen 5 Mikrometern und 25 Mikro-metern aufweisen, oder
wobei die thermoplastischen Partikel eine Partikelgrößenverteilung aufweisen, gemessen mittels einem Laserbeugungsstreuungsverfahren, sodass, wenn eine kumulative Kurve mit dem Gesamtvolumen als 100 % bestimmt wird, ein Partikeldurchmesser der thermoplastischen Partikel, der eine kumulative Kurve von 90 % aufweist, zwischen etwa 5 $\mu$m und etwa 20 $\mu$m beträgt.

6. Prepreg-Lage nach einem der Ansprüche 1 bis 5, wobei die wärmehärtbare Harzzusammensetzung aus 5 bis 15 Gew.-% thermoplastischen Partikeln besteht, oder

wobei die thermoplastischen Partikel aus einem Thermoplast bestehen, der aus der Gruppe ausgewählt ist, bestehend aus Polyamiden, Polysulfonen, Polyimiden und Polyestern, oder
wobei die thermoplastischen Partikel aus einem Polyamid bestehen, das aus der Gruppe ausgewählt ist, bestehend aus Nylon 12, Nylon 11, Nylon 6, Nylon 6/12-Copolymeren und Nylons, die so modifiziert sind, dass sie ein semi-IPN (interpenetrierendes Polymernetzwerk) aufweisen.

7. Prepreg-Lage nach einem der Ansprüche 1 bis 6, wobei die Prepreg-Lage eine Wasseraufnahmerate von 2 bis 7 % aufweist.

8. Prepreg-Lage nach einem der Ansprüche 1 bis 7, wobei die Prepreg-Lage teilweise mit der wärmehärtbaren Harzzusammensetzung imprägniert ist, um einen Faserluftweg innerhalb der Prepreg-Lage bereitzustellen.

9. Verfahren zur Herstellung einer Prepreg-Lage nach einem der Ansprüche 1 bis 8, umfassend das Imprägnieren einer Faserschicht mit einer wärmehärtbaren Harzzusammensetzung, um eine Vorläufer-Prepreg-Lage zu bilden, wobei eine erste Seite der Vorläufer-Prepreg-Lage zumindest teilweise mit der wärmehärtbaren Harzzusammensetzung bedeckt ist, und umfassend das Aussetzen der Vorläufer-Prepreg-Lage zu Vakuumbedingungen bei einer Temperatur und für eine Zeitdauer, die zur Herstellung der Prepreg-Lage wirksam sind.

10. Verfahren nach Anspruch 9, wobei die Temperatur 20 °C bis 80 °C beträgt und die Zeit 0,1 Stunden bis 24 Stunden beträgt, oder

wobei die Vorläufer-Prepreg-Lage einem Vakuum von 0,01 MPa bis 0,1 MPa ausgesetzt wird, oder
wobei die Temperatur 20 °C bis 80 °C beträgt, die Zeit 0,1 Stunden bis 24 Stunden beträgt und die Vorläufer-Prepreg-Lage einem Vakuum von 0,01 MPa bis 0,1 MPa ausgesetzt wird.

11. Verfahren zur Herstellung eines Prepreg-Stapels, umfassend das Stapeln einer Vielzahl von Prepreg-Lagen nach einem der Ansprüche 1 bis 8.

12. Verfahren zur Herstellung eines faserverstärkten Verbundwerkstoffs, umfassend das Härten eines Prepreg-Stapels, der eine Vielzahl von Prepreg-Lagen nach einem der Ansprüche 1 bis 8 umfasst, oder

das Verfahren zur Herstellung eines faserverstärkten Verbundwerkstoffs, wobei das Härten in einem Ofen durchgeführt wird, und/oder
wobei der Prepreg-Stapel während des Härtens in einem Vakuumbeutel positioniert wird.

13. Verfahren zum Produzieren einer faserverstärkten Verbundstruktur, umfassend:

a) Laminieren einer Vielzahl von Prepreg-Lagen nach einem der Ansprüche 1 bis 8 in einer Stapelreihenfolge, um einen Prepreg-Stapel zu bilden; und
b) Konsolidieren und Härten des Prepreg-Stapels, wodurch eine faserverstärkte Verbundstruktur gebildet wird.

14. Verfahren nach Anspruch 13, wobei das Laminieren zur Bildung eines Prepreg-Stapels durch ein automatisiertes Faserablagesystem (AFP) oder ein automatisiertes Tape-Ablagesystem (ATL) durchgeführt wird, ausgestattet mit Mitteln zum Ausgeben und Verdichten von Prepreg-Lagen direkt auf einer Formoberfläche, um eine faserverstärkte Verbundstruktur zu bilden.

**Revendications**

1. Feuille de pré-imprégné ayant une première surface externe et une seconde surface externe définissant un plan et qui est constituée d'une couche de fibres imprégnée d'une composition de résine thermodurcissable constituée d'une résine thermodurcissable et de particules thermoplastiques, dans lequel la feuille de pré-imprégné, lorsqu'elle est disposée en plusieurs plis, fournit un empilement de pré-imprégné ayant une perméabilité aux gaz dans le plan dans une direction parallèle au plan de la feuille de pré-imprégné et a au moins l'un des attributs a) à d) :

   a) au moins l'une des surfaces externes de la feuille de pré-imprégné a une rugosité de surface moyenne $R_a$ de 3 $\mu$m à 8 $\mu$m, la rugosité de surface moyenne $R_a$ étant déterminée comme décrit dans la présente invention ;
   b) au moins l'une des surfaces externes de la feuille de pré-imprégné a un pourcentage d'exposition des particules thermoplastiques de 20 % à 80 % ;
   c) lorsqu'elle est disposée en plusieurs plis, la feuille de pré-imprégné fournit un empilement de pré-imprégné ayant une perméabilité aux gaz stratifiée dans la longueur dans une direction parallèle au plan de la feuille de pré-imprégné, déterminée comme décrit dans la présente invention, qui est supérieure à 5,5 x $10^{-14}$ $m^2$ à une longueur stratifiée de 1 m ;
   d) un rapport de B/A d'au moins 0,5, dans lequel B et la perméabilité aux gaz stratifiée dans la longueur dans la direction parallèle au plan de la feuille de pré-imprégné à une longueur stratifiée de 1 m et A est la perméabilité aux gaz dans le plan dans une direction parallèle au plan de la feuille de pré-imprégné, déterminée comme décrit dans la présente invention.

2. Feuille de pré-imprégné selon la revendication 1, dans laquelle la feuille de pré-imprégné a au moins deux des attributs a) à d), ou,

   dans laquelle la feuille de pré-imprégné a au moins trois des attributs a) à d), ou,
   dans laquelle la feuille de pré-imprégné a chacun des attributs a) à d).

3. Feuille de pré-imprégné selon la revendication 1 ou 2, où A est supérieur à 5,5 x $10^{-14}$ $m^2$, ou, dans laquelle la feuille de pré-imprégné au moins l'un des attributs a) ou b) et les deux attributs c) et d) et A est supérieur à 5,5 x $10^{-14}$ $m^2$.

4. Feuille de pré-imprégné selon l'une quelconque des revendications 1 à 3, dans laquelle la composition de résine thermodurcissable a une température de viscosité minimale et la feuille de pré-imprégné a été conditionnée à une température qui est de 20 °C à 80 °C de moins que la température de viscosité minimale de la composition des résine thermodurcissable.

5. Feuille de pré-imprégné selon l'une quelconque des revendications 1 à 4, dans laquelle les particules thermoplastiques sont exposées sur au moins l'une parmi la première surface externe ou la seconde surface externe, ou

   dans laquelle les particules thermoplastiques ont une granulométrie, mesurée par une méthode de diffraction/-diffusion laser, d'entre 5 microns et 25 microns, ou
   dans laquelle les particules thermoplastiques ont une distribution granulométrique comme mesuré par une méthode de diffraction/diffusion laser de telle sorte que lorsqu'une courbe cumulative est déterminée avec 100 % correspondant au volume total, un diamètre des particules thermoplastiques ayant une courbe cumulative de 90 % est entre environ 5 $\mu$m et environ 20 $\mu$m.

6. Feuille de pré-imprégné selon l'une quelconque des revendications 1 à 5, dans laquelle la composition de résine thermodurcissable est constituée d'entre 5 et 15 % en poids de particules thermoplastiques, ou

   dans laquelle les particules thermoplastiques sont constituées d'un thermoplastique choisi dans le groupe constitué par les polyamides, les polysulfones, les polyimides et les polyesters, ou
   dans laquelle les particules thermoplastiques sont constituées d'un polyamide choisi dans le groupe constitué par le nylon 12, le nylon 11, le nylon 6, les copolymères de nylon 6/12, et les nylons modifiés pour avoir un réseau polymère semi-interpénétré (semi-IPN).

7. Feuille de pré-imprégné selon l'une quelconque des revendications 1 à 6, dans laquelle la feuille de pré-imprégné a un taux d'absorption d'eau de 2 à 7 %.

8. Feuille de pré-imprégné selon l'une quelconque des revendications 1 à 7, dans laquelle la feuille de pré-imprégné est partiellement imprégnée de la composition de résine thermodurcissable pour fournir un trajet d'air à travers les fibres au sein de la feuille de pré-imprégné.

9. Procédé de fabrication d'une feuille de pré-imprégné selon l'une quelconque des revendications 1 à 8, comprenant les étapes consistant à imprégner une couche de fibre avec une composition de résine thermodurcissable afin de former une feuille de pré-imprégné précurseur dans lequel un premier côté de la feuille de pré-imprégné précurseur est au moins partiellement recouvert de la composition de résine thermodurcissable et à soumettre la feuille de pré-imprégné précurseur à des conditions de vide à une température et pendant un temps efficaces pour produire la feuille de pré-imprégné.

10. Procédé selon la revendication 9, dans lequel la température est de 20 °C à 80 °C et le temps est entre 0,1 heure et 24 heures, ou

   dans lequel la feuille de pré-imprégné précurseur est soumise à un vide de 0,01 MPa à 0,1 MPa, ou
   dans lequel la température est de 20 °C à 80 °C, le temps est de 0,1 heure à 24 heures et la feuille de pré-imprégné précurseur est soumise à un vide de 0,01 MPa à 0,1 MPa.

11. Procédé de réalisation d'un empilement de pré-imprégné, comprenant une étape consistant à empiler une pluralité de feuilles de pré-imprégné selon l'une quelconque des revendications 1 à 8.

12. Procédé de réalisation d'un matériau composite renforcé de fibres, comprenant une étape consistant à faire durcir un empilement de pré-imprégné comprenant une pluralité de feuilles de pré-imprégné selon l'une quelconque des revendications 1 à 8, ou

   le procédé de réalisation d'un matériau composite renforcé de fibres, dans lequel l'étape consistant à faire durcir est mise en œuvre dans un four, et/ou
   dans lequel l'empilement de pré-imprégné est positionné dans une poche à vide pendant l'étape consistant à faire durcir.

13. Procédé de fabrication d'une structure composite renforcée de fibres, comprenant les étapes consistant à :

   a) stratifier une pluralité de feuilles de pré-imprégné selon l'une quelconque des revendications 1 à 8, dans une séquence d'empilement, pour former un empilement de pré-imprégné ; et
   b) consolider et faire durcir l'empilement de pré-imprégné, formant ainsi une structure composite renforcée de fibres.

14. Procédé selon la revendication 13 dans lequel ladite étape consistant à stratifier pour former un empilement de pré-imprégné est mise en œuvre par un système automatisé de placement de fibres (AFP) ou un système de disposition automatisé par ruban (ATL) équipé de moyens de distribution et de compactage de feuilles de pré-imprégné directement sur une surface de moulage pour former une structure composite renforcée de fibres.

Fig. 1

EP 3 746 500 B1

Fig. 2

Fig. 3

3A    3B    3C

Fig. 4

**REFERENCES CITED IN THE DESCRIPTION**

**Patent documents cited in the description**

- WO 2017103669 A1
- WO 2017103669 A
- US 6391436 B
- US 20130217283 A
- US 20140087178 A
- US 20140309336 A
- JP 2069566 A
- JP 4292634 A
- WO 94016003 A
- JP 2032843 A
- JP 1104624 A

**Non-patent literature cited in the description**

- **KEVIN HSIAO**. Gas Transport and Water Vaporization in Out-of-Autoclave Prepreg Laminates. University of British Columbia, 2012